# EUROPEAN PATENT SPECIFICATION

(11) **EP 4 304 053 B1**
(45) Date of publication and mention of the grant of the patent: **09.12.2026**
(21) Application number: 23175892.1
(22) Date of filing: 29.05.2023
(51) Int. Cl.: H02K 15/022, H02K 1/14, H02K 3/26, H02K 99/00, H01F 41/04

(54) **METHOD OF MANUFACTURING A STATOR FOR AN ELECTRIC MOTOR, STATOR, AND ELECTRIC MOTOR**
VERFAHREN ZUR HERSTELLUNG EINES STATORS FÜR EINEN ELEKTROMOTOR, STATOR UND ELEKTROMOTOR
PROCÉDÉ DE FABRICATION D'UN STATOR POUR UN MOTEUR ÉLECTRIQUE, STATOR ET MOTEUR ÉLECTRIQUE

(30) Priority: 08.07.2022 IT 202200014485
(43) Date of publication of application: 10.01.2024
(73) Proprietor: STMicroelectronics S.r.l., 20864 Agrate Brianza (MB) (IT)
(72) Inventor: SEGHIZZI, Luca, 20125 Milano (IT); VERCESI, Federico, 20134 Milano (IT); LONGONI, Gianluca, 20063 Cernusco sul Naviglio (MI) (IT)
(74) Representative: Studio Torta S.p.A.

(56) References cited:
- EP-A1- 0 725 407
- US-A1- 2007 126 300
- US-A1- 2008 252 407

## Description

The present invention relates to a method of manufacturing a component, in particular a stator, for an electric or electromagnetic actuator or motor, such as a stator for a three-phase asynchronous electric motor.

As is known, a three-phase asynchronous motor is supplied by a system of three-phase voltages, i.e., three voltages that are phase-shifted by 120° with respect to one another. Structurally, a three-phase motor is constituted by a fixed part (stator), which carries three windings, the axes of which are arranged at 120° with respect to one another, and by a mobile part (rotor) arranged at the centre of the stator windings, which carries an electrical circuit closed on itself. The stator may alternatively, envisage six windings shifted by 60° with respect to one another. Present between the stator and the rotor is a gap of air or dielectric, to enable free rotation of the rotor.

The stator coils are supplied, as has been said, by a three-phase system of voltages, which cause generation of a variable magnetic field by each coil. In the area comprised between the three coils the magnetic field is the sum of the magnetic fields of the coils. As a result of the mutual arrangement of the coils and of the three-phase system of voltages that supply the windings, the resulting magnetic field is not fixed but is variable; this magnetic field rotates about the axis of the motor at a pre-set frequency (equal to the frequency of the currents).

On account of the magnetic flux that concatenates with the rotor windings an induced electromotive force is set up, which opposes the cause that has generated it.

On account of miniaturization of the components required for the development of micro-robots or micro-actuators, there is felt the need to miniaturize the components of a three-phase electric motor. In particular, an effort is required for miniaturizing the stator components, which include the coils.

Patent document US2007/126300A1 relates generally to reluctance motors and, more specifically, to a miniaturized reluctance motor having at least a portion thereof formed using a MEMS fabrication technique.

Patent document CH1276772 relates to a micromotor for timepieces.

Patent document EP0725407A1 relates to inductive structures, and more particularly, to an inductor for use in high frequency applications and which is manufactured using standard integrated circuit (IC) fabrication techniques.

Patent document US2008252407 generally relates to inductive electrical devices and methodologies for manufacturing such devices for use in power conversion applications.

However, the above-mentioned issues are not solved.

The aim of the present invention is to provide a method of manufacturing a stator for an electric actuator or motor, a stator, and an electric actuator or motor that are designed to overcome the drawbacks of the prior art.

According to the present invention, a method of manufacturing a stator for an electric actuator or motor, a stator, and an electric actuator or motor are provided, as defined in the annexed claims.

For a better understanding of the present invention, preferred embodiments thereof are now described purely by way of non-limiting example, with reference to the attached drawings, wherein:
- Figure 1 illustrates, in top plan view, a schematic representation of a stator according to one aspect of the present invention;
- Figure 2 illustrates, in top plan view, an enlarged detail of a coil of the stator of Figure 1;
- Figures 3A and 3B illustrate respective cross-sectional views of the coil of Figure 2, along the lines of section A-A and B-B, respectively;
- Figures 4A-4S illustrate, in cross-sectional view along the line of section C-C of Figure 1, steps for manufacturing the stator of Figure 1;
- Figures 5A-5D illustrate, in cross-sectional view, steps for manufacturing conductive paths that are to form, in part, the coil of Figure 2;
- Figure 6 shows, in cross-sectional view along the line of section C-C of Figure 1, a stator according to an embodiment alternative to that of Figure 4S;
- Figures 7A and 7B show, in cross-sectional view along the line of section C-C of Figure 1, part of the steps for manufacturing the stator of Figure 1 according to a further embodiment of the present invention;
- Figures 8A-8F illustrate, in cross-sectional view, steps for manufacturing conductive paths that are to form, in part, the coil of Figure 2 according to an embodiment alternative to those of Figures 5A-5D;
- Figures 9A-9C show, in cross-sectional view, intermediate steps for formation of electrical-connection paths designed to supply a current signal to the coils of the stator of Figure 1; and
- Figures 10A and 10B show in top plan view and in cross-sectional view, respectively, a three-phase asynchronous electric motor comprising the stator according to the present invention and a rotor.

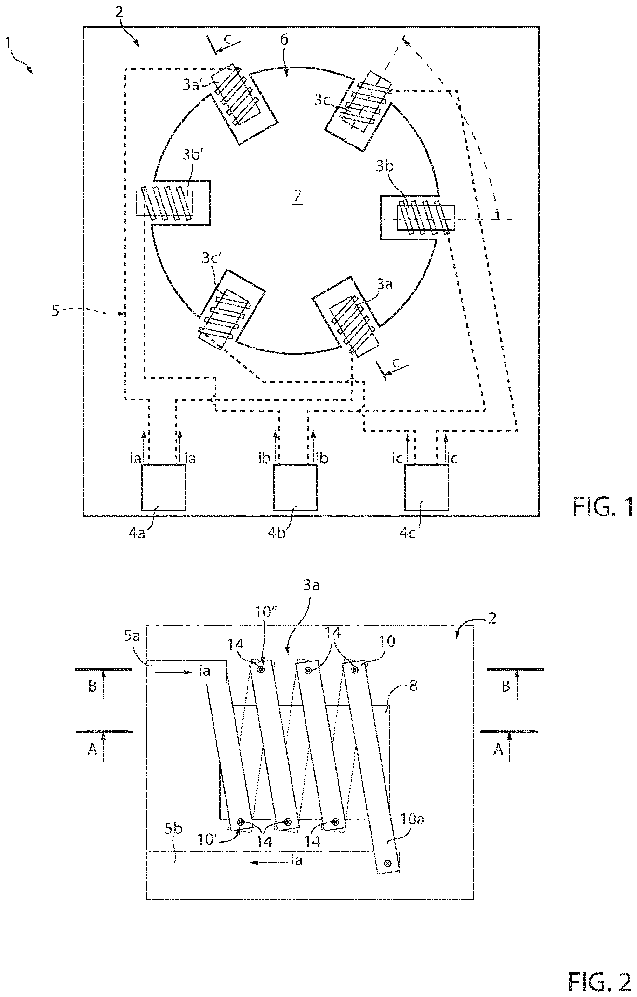

Figure 1 is a schematic illustration of a stator 1 for a three-phase asynchronous motor, according to one aspect of the present invention. The stator 1 of Figure 1 is obtained using MEMS technology, in a body 2 including semiconductor material. The stator 1 has coils, or windings, in a number equal to three or a multiple of three. In the example of Figure 1 six coils 3a, 3b, 3c and 3a', 3b', 3c' are present.

The windings 3a and 3a' are electrically connected to a signal generator 4a (a voltage or current generator), configured to get one and the same current iₐ to flow in both of the windings 3a, 3a'.

The windings 3b and 3b' are electrically connected to a signal generator 4b (a voltage or current generator), configured to get one and the same current i_{b} to flow in both of the windings 3b, 3b'.

The windings 3c and 3c' are electrically connected to a signal generator 4c (a voltage or current generator), configured to get one and the same current i_{c} to flow in both of the windings 3c, 3c'.

Conductive leads (designated as a whole by the reference number 5) are present for carrying the currents iₐ-i_{c} to the windings 3a-3c, 3a'-3c'.

The windings 3a-3c are arranged along a circular path 6 defined through the body 2 and are separated from one another by one and the same angle of 60°. Likewise, also the windings 3a'-3c' are arranged along the circular path 6 and are separated from one another by the same angle of 60°. More in particular, the windings 3a and 3a' are aligned along a diameter of the circumference 6 and are thus separated from one another, along the circumference 6, by an angle of 180°. The same applies to the other windings.

The circular path 6 defines a hole through the body 2 and may be a through opening or an opening closed on one side of the body 2. The windings 3a-3c and 3a'-3c' project at least in part from (or are suspended at least in part over) the opening of the circular path 6. The rotor (not illustrated) of the three-phase asynchronous motor may be inserted into the opening of the circular path.

Figure 2 illustrates, in a cartesian plane of mutually orthogonal axes X, Y, Z, an enlarged view of a coil (for example, the coil 3a), where only some elements useful for an understanding of the present invention are represented. In particular, the coil 3a of Figure 2 has conductive strips 10 (e.g., made of metal, in particular gold), which extend on opposite sides of a core 8 made of ferromagnetic material, for example an alloy of, or including, nickel-iron (NiFe). Mutually coplanar conductive strips 10 (i.e., all those above the core 8 and, respectively, all those underneath the core 8) are parallel to one another and physically separated and electrically insulated (along the axis X) from one another. The number of the coplanar conductive strips 10 is chosen in the stage of design and sizing of the end device to be produced, according, for example, to the desired performance; the greater the number of windings (i.e., of conductive strips), the greater the force produced by the stator thus obtained. By way of non-limiting example, the number of the coplanar conductive strips 10 is between 2 and 100.

To produce the coil 3a, each conductive strip 10 that extends over the core 8 is electrically coupled, at a first end portion 10' thereof, to a conductive strip 10 that extends underneath the core 8 and, at a second end portion 10" thereof opposite to the first end portion 10', to another conductive strip 10 that extends underneath the core 8. In this context, the terms "over" and "underneath" refer to the direction of the axis Z.

To enable supply of the electric current iₐ to the coil 3a, two of the conductive strips 10 (in Figure 2, the first and the last of the series of top coplanar leads) have a respective end portion coupled to a respective conductive strip 10, while the other end portion is coupled to a respective conductive lead 5a, 5b. The conductive lead 5a supplies the current iₐ at input to the coil 3a, whereas the conductive lead 5b draws the current leaving the coil 3a. The conductive leads 5a and 5b are respectively connected to opposite terminals (+ and -) of the voltage or current generator 4a. The same applies to the other coils 3b-3c, 3a' -3c' .

The electrical coupling between conductive strips 10 that extend in different planes (i.e., opposite to the core 8) is obtained by conductive through vias 14, which extend, for example, in a direction orthogonal to the plane of lie of the conductive strips 10, in electrical contact with a conductive strip 10 above the core 8 and with a respective conductive strip 10 below the core 8.

For each core 8, a number (in particular, higher than 1) of through vias 14 extends on one side of the core 8 and a number (in particular, higher than 1) of through vias 14 extends on another, opposite, side of the core 8. The number of through vias 14 extending on one side of the core 8 may be equal to, or different than, the number of vias 14 extending at the other, opposite, side of the core 8, according to the design.

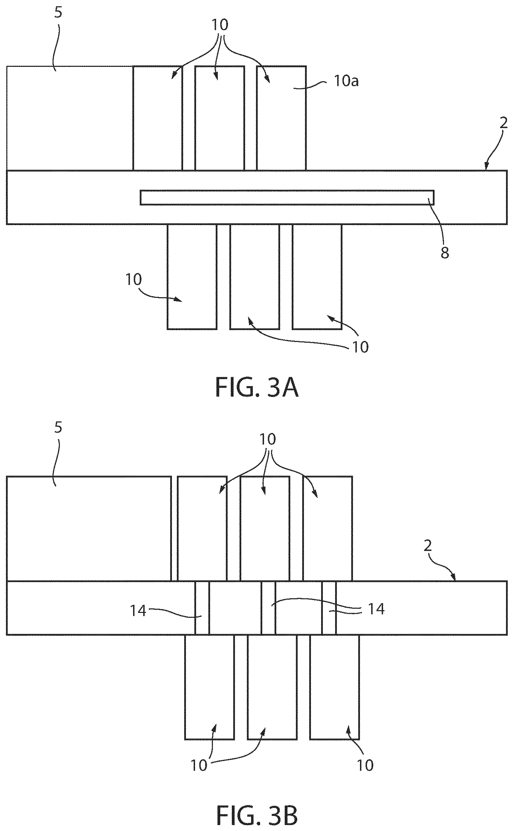

Figure 3A is a simplified cross-sectional view of the winding 3a of Figure 2, along the line of section A-A, and Figure 3B is a simplified cross-sectional view of the winding 3a of Figure 2, along the line of section B-B.

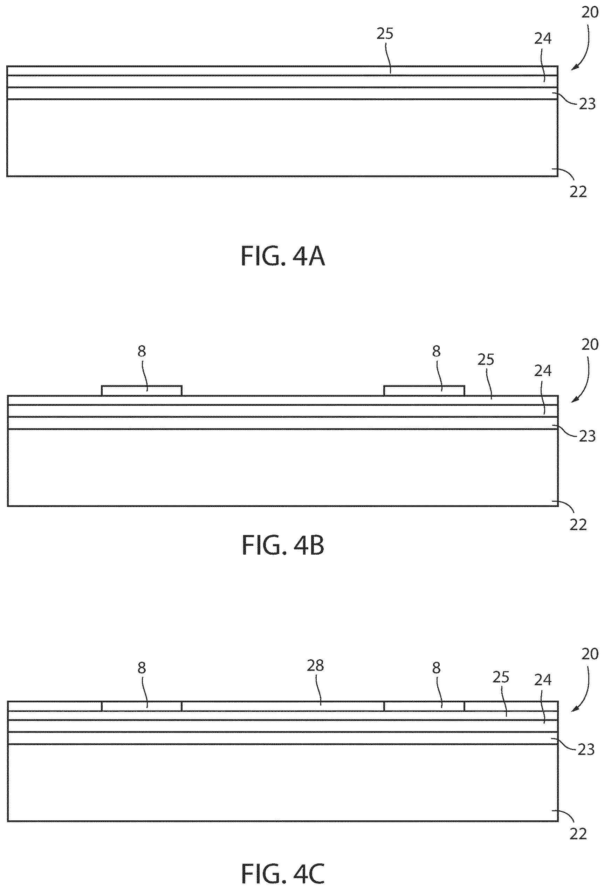

With reference to Figures 4A-4S there now follows a description of steps of a method of manufacturing the stator 1. Figures 4A-4S are represented in the same triaxial reference system X, Y, Z as that of Figure 2 and illustrate, in cross-sectional view, the cross-section C-C of Figure 1.

With reference to Figure 4A, there are provided: a first body 20 including a first semiconductor layer 24, a first structural layer 25 on a first side of the first semiconductor layer 24, and a second structural layer 23 on a second side, opposite to the first side along the axis Z, of the first semiconductor layer 24. The semiconductor layer 24 extends over the second structural layer 23, in particular in direct contact with a first side of the second structural layer 23. A supporting substrate 22 extends below the second structural layer 23, in particular in direct contact with a second side, opposite to the first side along the axis Z, of the second structural layer 23.

In one embodiment, the substrate 22 is of silicon, the intermediate layer 23 is of an oxide of silicon (SiO₂), and the first semiconductor layer 24 is of silicon. For example, the structure (stack) formed by the substrate 22, the intermediate layer 23 and the first semiconductor layer 24 is a SOI (Silicon-On-Insulator) structure, per se known in the art. Without losing generality, the second structural layer 23 is also named, in the following, intermediate layer 23 and the first semiconductor layer 24 is also named, in the following, top layer 24.

In another possible embodiment, the substrate 22 is omitted and the solid body 20 only includes a stack including the second structural layer 23 (e.g. of insulating material) and the top layer 24 (e.g. of semiconductor material) over and in contact with the second structural layer 23. The material of the layer 23 is chosen such that it can be removed (etched) selectively with respect to the material of the layer 24.

The first structural layer 25 is formed by a step of oxidation of the top layer 24; accordingly, as a consequence of such oxidation step, a thin layer 25 (i.e., the first structural layer 25) of insulating material, for example silicon oxide, is uniformly formed on the top layer 24.

By way of example, the substrate 22 has a thickness in the range between 500 µm and 900 µm, the intermediate layer 23 has a thickness in the range between 0.2 µm and 2 µm, the top layer 24 has a thickness in the range between 0.2 µm and 100 µm, and the layer 25 has a thickness in the range between 0.1 µm and 3.5 µm.

Then (Figure 4B), a ferromagnetic core region 8 is formed on the first structural layer 25. The ferromagnetic core region 8 is, in particular, a core layer made of a nickel-iron alloy (or some other compatible material) formed for example by a deposition step; the ferromagnetic core region 8 is then patterned photolithographically (or by some other patterning technique) to form the core 8 described previously. One core 8 is formed for each winding 3a-3c, 3a'-3c'. The shape and extension of the core 8 are defined by design, according to the characteristics desired for the stator 1 (for example based on its envisaged use). For instance, the core 8 has a substantially rectangular shape with major side of a size such as to extend throughout the extension, along X, of the windings of the respective coil; for example, for a coil with two winding, the core 8 could have an extension along X of approximately 20 µm; for a coil with one hundred windings, the core 8 could have an extension of approximately 800 µm. The minor side of the core 8 has, for example, a size in the range between 20 µm and 500 µm. The thickness along Z of the core 8 is, for example, comprised between 0.01 µm and 3 µm.

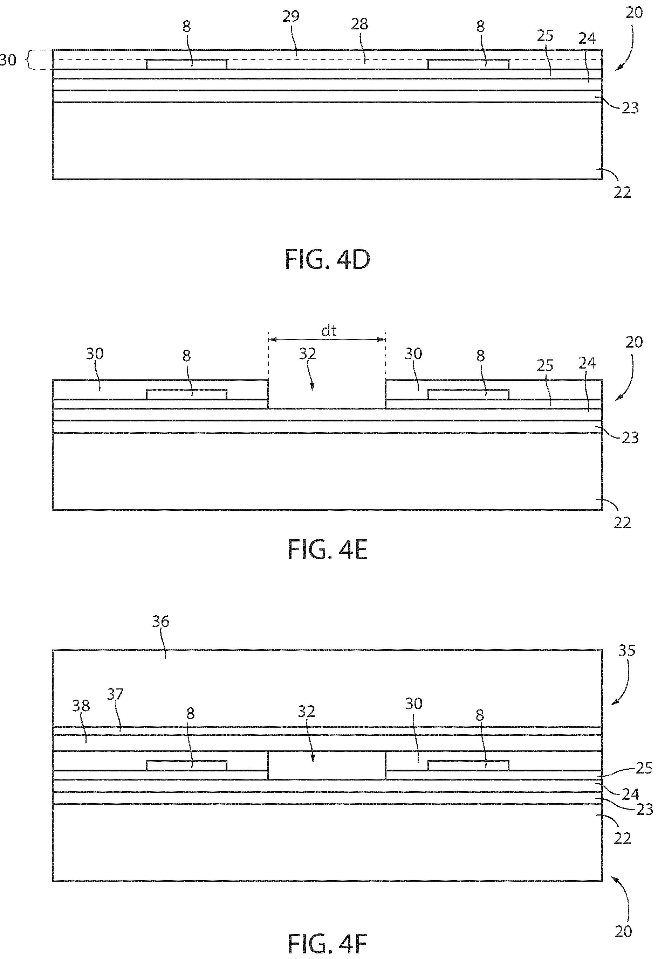

With reference to figures 4C and 4D, steps are carried out to form a protective layer, or insulating layer, 30 on the core 8, such that the core 8 is covered by the protective layer 30. The protective layer 30 has the function of electrically insulate the core 8.

An insulating layer 28 is formed (Figure 4C) on the layer 25 and on the core 8; the insulating layer 28 is for example of TEOS. Such TEOS layer 28 is then planarized so as to render the top surface thereof planar, preferably without exposing the core 8.

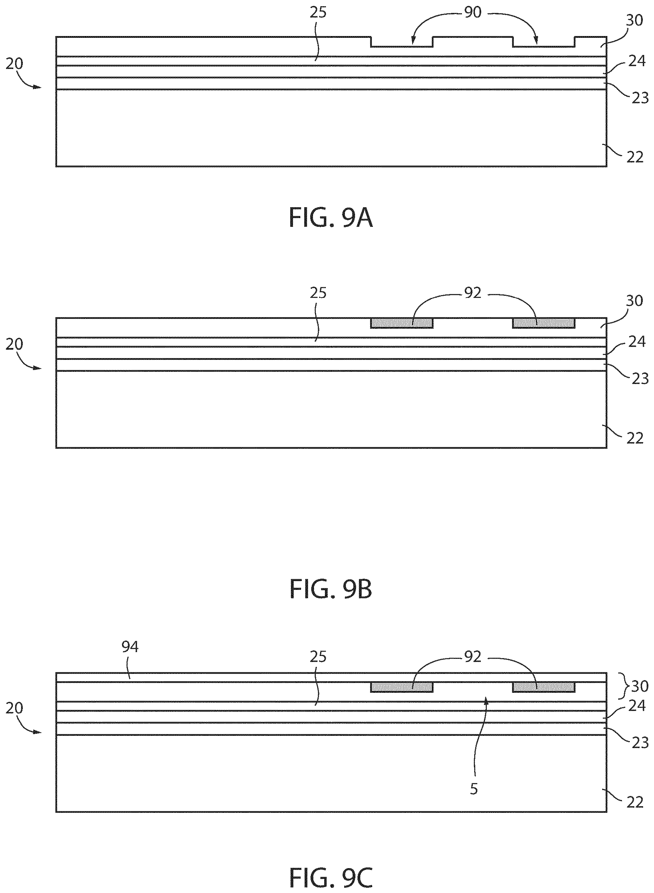

Next (Figure 4D), a further deposition of an insulating layer 29 is carried out, for example a layer made of the same material as that of the layer 28 (here, TEOS), on the layer 28 and on the core 8. It is thus obtained the protective layer 30 (given by the sum of the layers 28 and 29) having a thickness (measured along Z alongside the core 8) comprised, for example, between 0.2 µm and 5 µm. In this step it is possible to form the conductive leads 5, as illustrated by way of example in Figures 9A-9C and described with reference to the above figures.

Then (Figure 4E), the protective layer 30 and the underlying layer 25 are selectively removed in a region where (as shown in subsequent steps) the central opening of the stator 1 in which to insert the rotor is to be formed. A trench 32 is thus formed having a circular shape and a diameter dₜ for example comprised between 50 µm and 2000 µm. The trench 32 extends right through the layers 30 and 25, exposing a surface portion of the semiconductor layer 24.

Then (Figure 4F), a coupling step is performed, in particular using a wafer-to-wafer bonding technique, for coupling a second body 35 (e.g. a SOI structure) on top of the protective layer 30.

The second body 35 includes a second semiconductor layer 38 on a third structural layer 37, wherein the third structural layer is made of a material that is selectively removable with respect to the material of the second semiconductor layer 38.

In one embodiment, where the second body 35 is a SOI structure 35, or a SOI wafer, the second body 35 comprises: a substrate 36, made of semiconductor material, such as silicon; the third structural layer 37, being an intermediate layer and thus named "intermediate layer" in the following without losing generality, made of insulating material, for example silicon oxide, which extends over the substrate 36; and the second semiconductor layer 38, being a top layer of the SOI stack and thus named "top layer" in the following without losing generality, made semiconductor material, such as silicon, which extends over the intermediate layer 37.

In another possible embodiment, the substrate 36 is omitted and the solid body 35 only includes a stack including the third structural layer 37 (e.g. of insulating material) and the top layer 38 (e.g. of semiconductor material) over and in contact with the third structural layer 37. The material of the layer 37 is chosen such that it can be removed (etched) selectively with respect to the material of the layer 38.

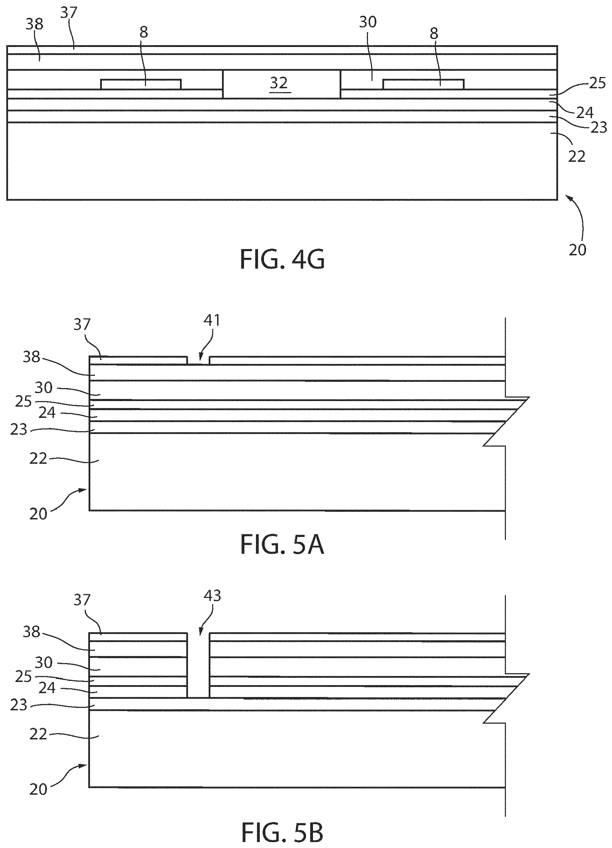

The method includes the step of coupling the second semiconductor layer 38 of the second body 35 to the protective dielectric layer 30. The trench 32 is thus closed to form a buried cavity (which is however denoted by the same reference number 32, for reasons of simplicity). Coupling is obtained by known fusion-bonding techniques. Then (Figure 4G), the substrate 36 of the SOI structure 35 (which had, up to this step, the function of handle substrate) is completely removed, for example by a grinding or CMP process, or some other appropriate technology. The intermediate layer 37 is thus exposed.

Now steps are carried out for the formation of the conductive through vias 14, which are not visible in the cross-section of Figures 4A-4G so far described.

Reference is now be made to Figures 5A-5D, which illustrate by way of example the manufacturing steps for the formation of the conductive through vias 14. Formation of just one via 14 is shown; however, the present teaching applies as well to the simultaneous formation of all the conductive through vias 14.

With reference to Figure 5A, the intermediate layer 37 is selectively etched in the regions where the through vias 14 are to be formed. For this purpose, a masked etch is used, with masking obtained by photolithographic techniques, to form a plurality of openings 41 (just one of which, as has been said, is shown in Figure 5A) through which a surface portion of the semiconductor layer 38 is exposed.

Then (Figure 5B), a plurality of etches are carried out (using appropriate etching chemistries according to the materials to be removed) at the openings 41 to remove in sequence the semiconductor layer 38 exposed through the opening 41, the insulating layer 30, the layer 25, and the semiconductor layer 24, thus exposing a surface portion of the intermediate layer 23. The trench 43 is in this way formed.

To form the trench 43, the same mask (not illustrated) used for the formation of the opening 41 is for example used. By way of example, to remove the silicon of the layers 38 and 24 a dry etch is used with plasma containing, for example, SF₆, to remove the TEOS of the layer 30 a dry etch is used with plasma containing, for example, CF₄, and to remove the silicon oxide of the layers 37 and 25 a dry etch is used with plasma containing, for example, CF₄.

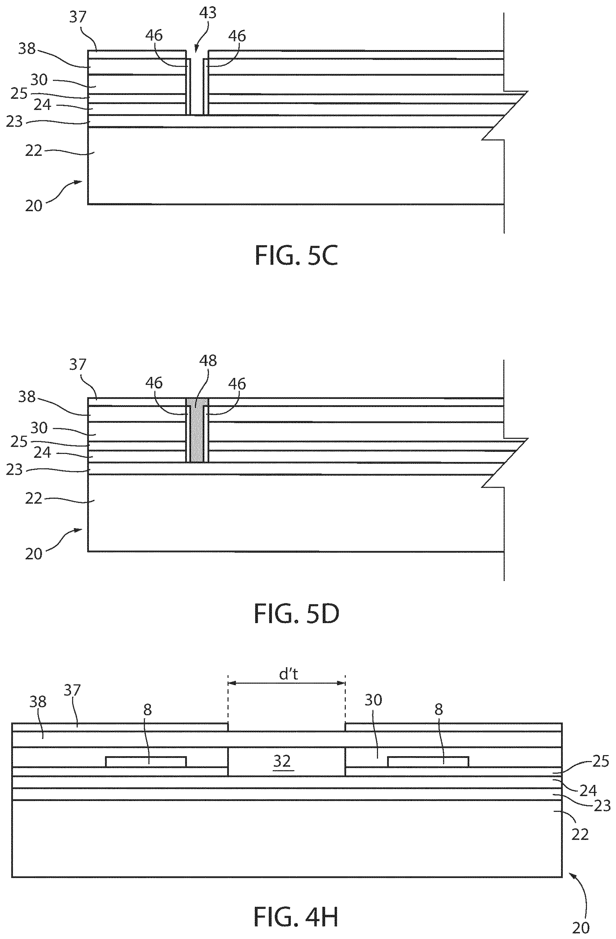

Then (Figure 5C), a step of passivation of the inner side walls of the trench 43 is carried out, for example by laying an insulating layer 46, e.g., of silicon oxide, with a thickness (measured along the axis X) comprised between 0.05 µm and 1 µm.

Then (Figure 5D), formation of the through vias 14 is completed by filling the trenches 43 with conductive material 48, for example copper, via electrodeposition and planarization (these are here RDL interconnections). The conductive material 48 fills the trenches 43 completely up to the height (along Z) to which the surface the insulating layer 37 extends. The passivation layer 46 electrically insulates the conductive material 48 from the semiconductor layers 24 and 38.

Reference is now once again made to the cross-section C-C.

Figure 4H represents a manufacturing step that follows formation of the conductive through vias 14 according to Figures 5A-5D.

With reference to Figure 4H, the insulating layer 37 is selectively etched to form an opening 50 substantially aligned, along Z, with the buried cavity 32. In top plan view, in the plane XY, the opening 50 has a circular shape and a diameter dₜ' equal to or greater than the diameter dₜ. The openings 50 and 32 are concentric.

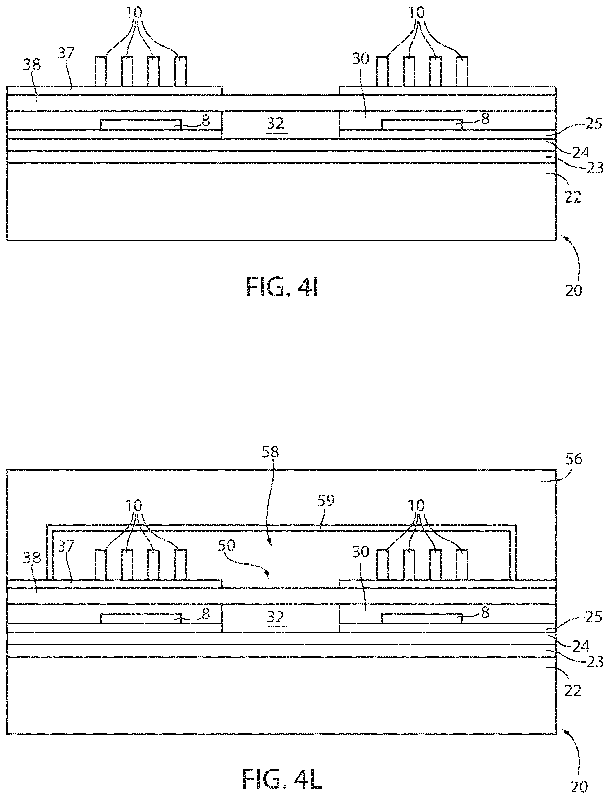

Then (Figure 4I), the conductive strips 10 are formed at a first side of the core 8 (simultaneously for each winding 3a-3C and 3a'-3c'). The conductive strips 10 are formed above the insulating layer 37.

For this purpose, it is possible to use a typical process for formation (growth) of gold, in particular: deposition of a seed layer; photolithographic patterning of the seed layer to define the predefined shape (i.e., the shape defined in the design stage) of the conductive strips 10; and electrochemical deposition of gold.

The thickness along Z of each conductive strip is comprised between 3 µm and 10 µm.

Then (Figure 4L), a cap 56 is coupled on the insulating layer 37. The cap 56 has a cavity 58 of a size such as to contain completely the conductive strips 10 formed up to this processing step. Consequently, the regions of coupling of the cap to the layer 37 are external to the region where the conductive strips 10 (of all the windings 3a-3c, 3a'-3c') are present. Coupling is obtained by known techniques of permanent coupling between two silicon wafers, amongst which, for example, Au-Au metal bonding, bonding with glassfrit material, fusion bonding. The cap 56 is, for example, made of silicon and has, at the cavity 58, a protective layer 59 of a material that may be selectively removed from the material of the cap 56, for example silicon oxide in the case of a silicon cap 56. The protective layer 59 uniformly covers the walls of the cap 56 that define the cavity 58. Consequently, following upon the coupling step of Figure 4L, the protective layer 59 faces the insulating layer 37 and the conductive strips 10.

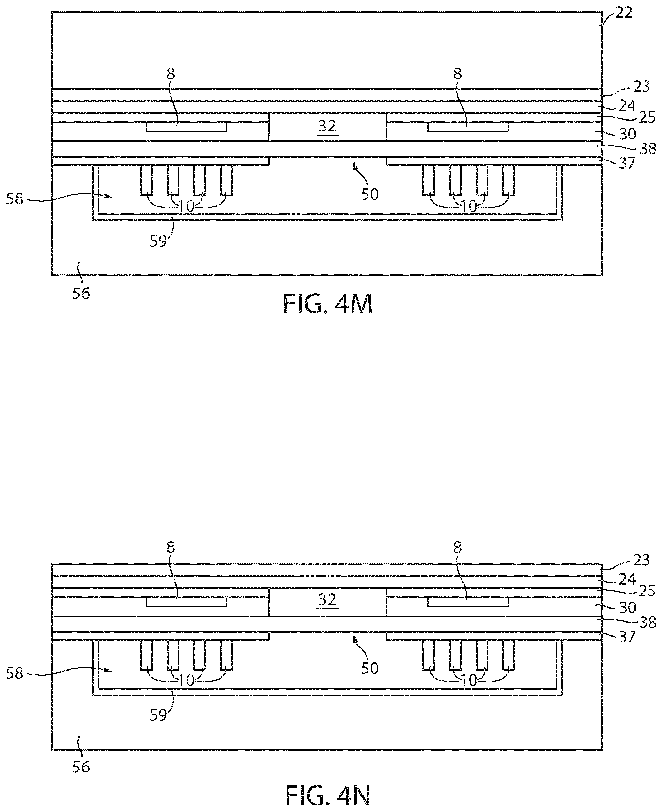

With reference to Figure 4M, a step of rotation of the body 20 and of the cap 56 is carried out to carry out machining steps at the substrate 22.

Next (Figure 4N), the substrate 22 is completely removed, for example by a grinding or CMP step or some other appropriate technique. The intermediate layer 23 is thus exposed.

Then (Figure 40), the insulating layer 23 is etched to remove selective portions thereof, thus forming an opening 61 concentric to, and having the same size and shape as, the opening 50.

In this processing step, also a selective etch of the insulating layer 23 is carried out at the conductive through vias 14 formed in the step of Figure 5D, to expose the conductive material 48 at the layer 23. This step is not illustrated in the figures.

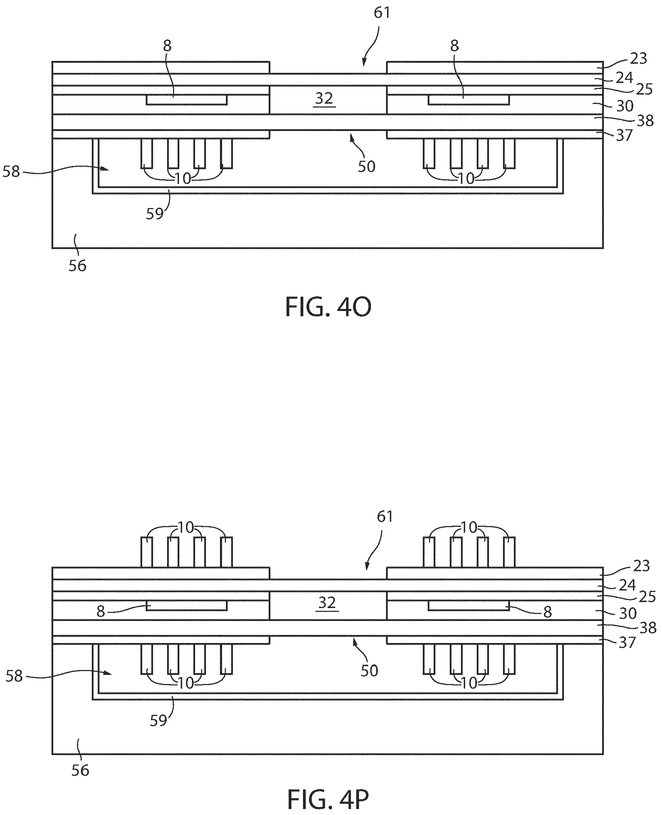

Next (Figure 4P), the conductive strips 10 are formed on the side of each core 8 opposite to the side where the conductive strips 10 have already been formed previously. The conductive strips 10 formed in the step of Figure 4P thus extend on the insulating layer 23. Formation of the aforesaid conductive strips 10 is obtained according to the same process described previously, which includes: deposition of a seed layer; photolithographically patterning of the seed layer to define the predefined shape (i.e., the shape defined in the design stage) of the conductive strips 10; and electrochemical deposition of gold.

The layer of gold extends over the layer 23 and within the openings made in the layer 23 in areas corresponding to the conductive through vias 14, reaching them and contacting them electrically.

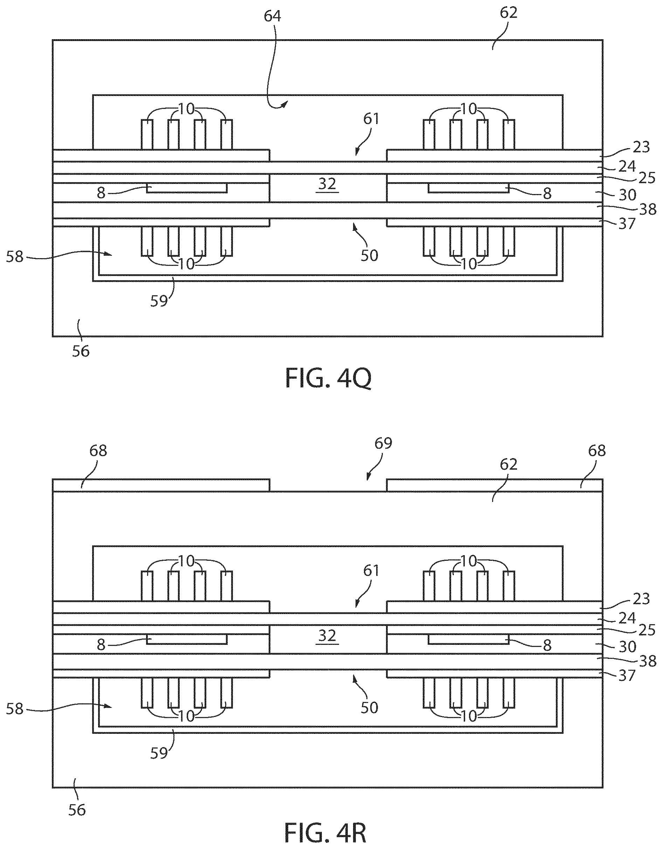

Then (Figure 4Q), a cap 62 is coupled to the insulating layer 23. The cap 62 has a cavity 64 of a size such as to contain completely the conductive strips 10 formed in the step of Figure 4P (by symmetry, the opening 64 of the cap 62 corresponds to the opening 58 of the cap 56). Consequently, also the regions of coupling of the cap 62 to the layer 23 correspond to the regions of coupling of the cap 56 to the layer 37 and are external to the region where the conductive strips 10 (of all the windings 3a-3c, 3a'-3c') are present. The coupling is obtained by known techniques of fusion bonding. The cap 62 is, for example, made of silicon.

Next (Figure 4R), an etching mask 68 is formed on the cap 62; the mask 68 has an opening 69 having the same shape (e.g., circular) and a size (in this example, the diameter) that is equal to or greater than the size (diameter) of the openings 50 and 61. The circular opening 69 is concentric to the circular openings 50 and 61.

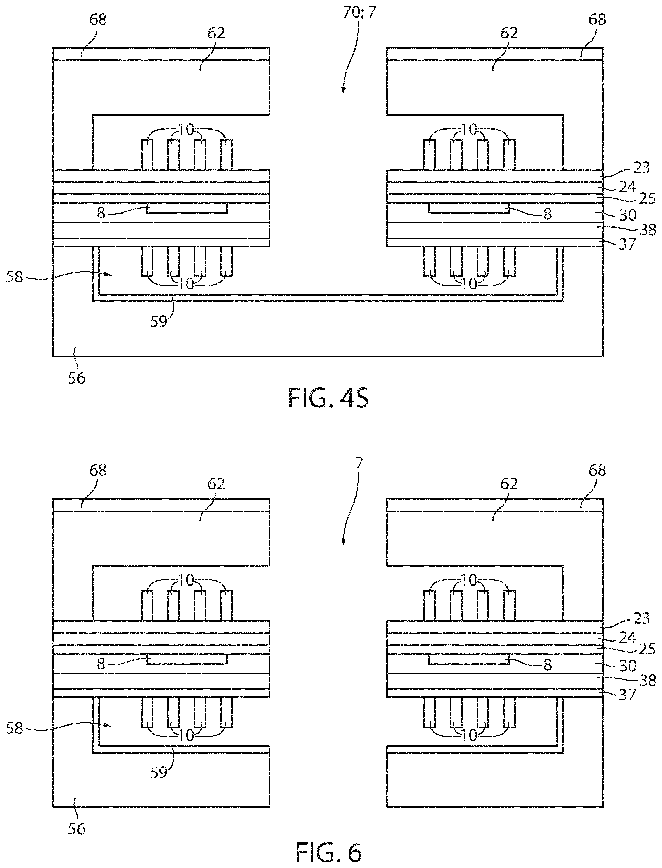

Then (Figure 4S), an etching step is carried out (e.g., dry etching, using for example CF₄ and C₄F₈ for removal of the oxides and SF₆ for removal of the silicon) at the cap 62 so as to remove completely portions thereof exposed through the opening 69 of the mask 68. Etching proceeds with complete removal of the portion of the semiconductor layer 38 exposed through the opening 61 and then the portion of the semiconductor layer 24 exposed through the cavity 32.

Since the etching chemistry is selective, the etch does not proceed by removing portions of the cap 56 in so far as the protective layer 59 functions as etch-stop layer.

The mask 68 may be removed or else kept to protect the cap 62.

According to an embodiment of the present invention, manufacture of the stator 1 is thus completed. The stator 1 of Figure 4S has an opening 70 for insertion of the rotor that is of a non-through type.

To form a through opening, it is possible to envisage a corresponding opening in the protective layer 59 of the cap 56 (obtained during formation of the protective layer 59), and continue the etch of Figure 4S up to complete removal of the material of the cap 56 exposed through said opening in the protective layer 59.

In this case, the stator 1 of Figure 6 is obtained, where the opening for insertion of the rotor is of a through type.

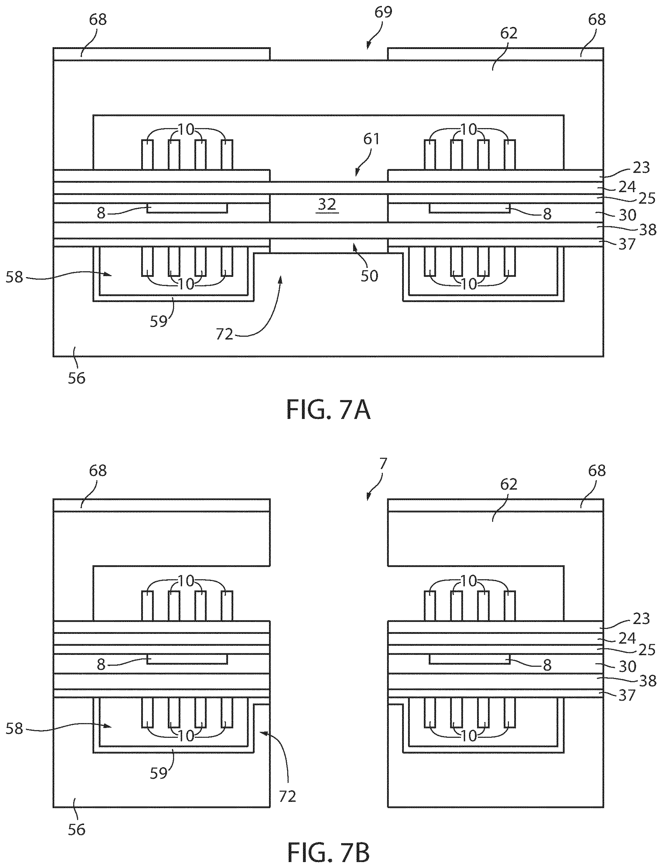

According to a further embodiment (illustrated in Figure 7A), to strengthen the structure in the case of a through opening it is possible to shape the cap 56 in such a way that it has a protuberance 72 in the region of the cap 56 that, after the coupling described in Figure 4L, is aligned to the opening 50. In this case, the protective layer 59 is not present where the cap 56 has to be selectively removed to create the through opening for the rotor. In other words, the protective layer 59 extends uniformly except for a portion of the protuberance 72 that, after coupling, is aligned to the opening 50. When the cap 56 is coupled to the rest of the structure, the protuberance 72 rests (by the protective layer 59) on the intermediate layer 37 alongside the opening 50 defined through the intermediate layer 37 and, in top plan view in the plane XY, covers the opening 50.

With reference to Figure 7B, etching of the cap 62 and of the semiconductor layers 38 and 24 continues through the opening in the protective layer 59 by removing exposed portions of the protuberance 72 until a through opening is formed which traverses the cap 56 completely.

In use in a motor, the rotor may be inserted completely, through the stator, in the opening thus formed.

In a further embodiment (not illustrated), the etch of Figure 7B is not carried out to form the through opening that traverses the cap 56 completely, but to form a non-through opening in the protuberance 72, which terminates within the cap 56. This embodiment, which is similar to the one described with reference to Figure 4S, presents the advantage, as compared to that of Figure 4S, of presenting a stronger structural support afforded by the presence of the protuberance 72.

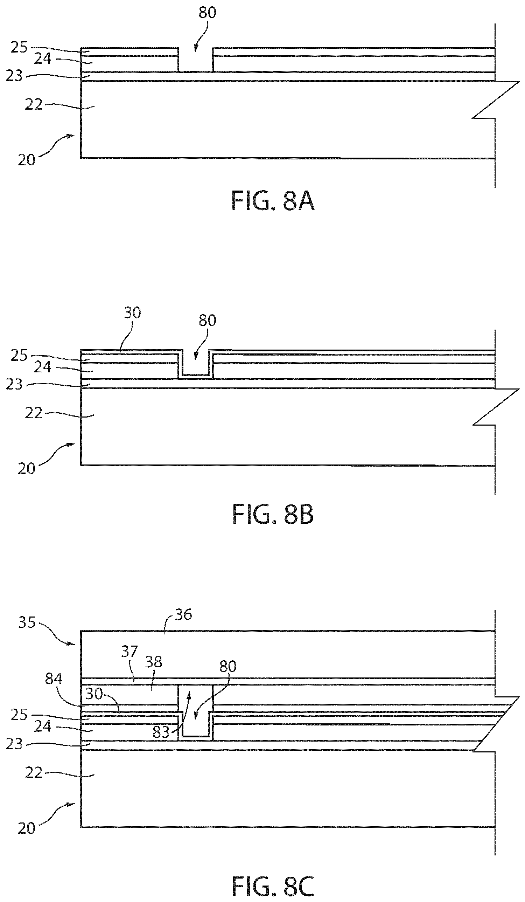

Figures 8A-8F show an embodiment of a portion of the stator 1 that is alternative with respect to what has been described previously. In particular, Figures 8A-8F refer to a possible further embodiment of formation of the conductive through vias 14, in a way alternative to what is represented in Figures 5A-5D. Figures 8A-8F illustrate a portion of the stator 1, during intermediate manufacturing steps, limitedly to a region thereof in which there is present a conductive through via 14. The present teaching applies to simultaneous manufacture of all the conductive through vias and, more in general, to manufacture of remaining portions of the stator where there is interaction between manufacture of the conductive through vias 14 and the remaining parts of the stator 1.

Elements of the stator 1 common to the embodiment described previously are designated by the same reference numbers and are not described any further.

With reference to Figure 8A, after provision of the SOI substrate 20 as in Figure 4A and formation of the core 8 where the design so requires, as in Figure 4B, an etch of the thin layer 25 and of the top layer 24 is carried out in the regions of the body 20 in which the through vias 14 are to be formed. An opening 80 is thus formed through which a surface portion of the intermediate layer 23 is exposed. The opening 80 has a shape, in top plan view in the plane XY, chosen between circular, oval, quadrangular, or generically polygonal, with a diameter comprised between 10 µm and 200 µm.

Then (Figure 8B), the step of formation of the layer 30 is carried out according to what has been described with reference to Figures 4C-4D. The layer 30 also penetrates into the opening made in the step of Figure 8A, covering the side walls and the bottom thereof (without filling it completely). In a way not illustrated in the cross-sectional view of Figure 8B, there is also formed the opening 32, according to what has been described in the case of Figure 4E.

Then (Figure 8C), the SOI substrate 35 is coupled in a way similar to what has been described with reference to Figure 4F. In the embodiment of Figure 8C, prior to the coupling step, the SOI substrate 35 is machined so as to form (e.g., by photolithographic and etching techniques) an opening 83 in the top layer 38; the opening 83 has a shape and a diameter corresponding to the shape and diameter of the opening 80. Next, a step of formation of an electrically insulating protective layer 84 is carried out (e.g., a layer of silicon oxide thermally grown or deposited) on the top layer 38 and on the inner walls and on the bottom of the opening 83. The protective layer 84 is selectively etched to expose a surface portion of the layer 38 in the region that, after coupling of the SOI wafers 20 and 35, directly faces the opening 35. In this way, as in Figure 4F, the cavity 32 has on the top and underneath regions made of the same material (here silicon) to favour the subsequent etching steps for opening the central channel into which the rotor will be inserted.

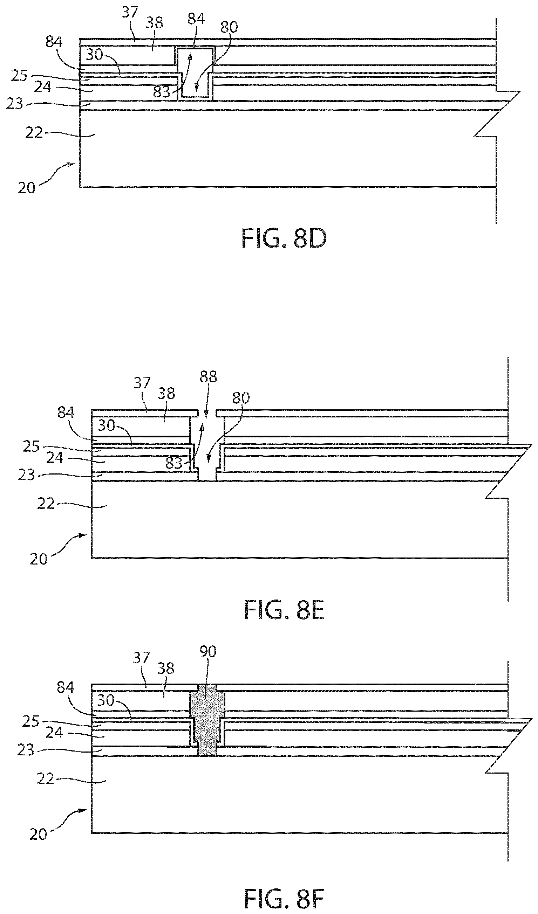

Then (Figure 8D), the substrate 36 is removed as in Figure 4G, leaving the intermediate layer 37.

With reference to Figure 8E, a step of successive etches is carried out to open a trench 88 in which subsequently (Figure 8F) the conductive region of the through vias 14 is to be formed. The trench 88 is formed by etching the intermediate layer 37 at the cavities 80, 83. Since, in this embodiment, both of the layers 37 and 84 are made of the same material (silicon oxide), a single etch is sufficient to remove locally both of the layers 37 and 84. The etch then proceeds by removing the layer 30 thus exposed through the openings 80, 83 and likewise removing the intermediate layer 23. The etching chemistry used in the step of Figure 8E is, for example, CF₄ or C₄F₈, which removes all the oxide layers considered.

Etching of the intermediate layer 23 may be omitted, or may be performed only in part. In this case, the layer 23 will in any case be removed to gain access to the conductive through via 14, as in the case of what has been described for the same step of Figure 40.

A step of filling of the trench 88 with conductive material, for example copper, is then carried out as described with reference to Figure 5D, to form a conductive region 90 of the through via 14.

The subsequent steps for manufacturing the stator 1 are then carried out as described with reference to Figures 4H-4S.

The variants of Figures 7A-7B (as the other embodiments not illustrated but described) also apply to the embodiment of the stator 1 of Figures 8A-8F.

Manufacture of the conductive leads 5 does not in itself form part of the present invention, and these may be obtained in a known way. For instance, as illustrated in Figure 9A, the conductive leads 5 may be formed following upon the step of formation of the layer 30 by removing selective regions of the layer 30 for a thickness of the layer 30 that is, for example, equal to or smaller than the thickness of the layer 29. This step defines the shape and extension of paths 91 of the leads 5.

Then (Figure 9B), a step is carried out of filling the paths 91 formed in this intermediate step with conductive material 92, for example copper.

A further step of deposition of a layer 94, made of the same material (e.g., TEOS) as the layer 29, covers the conductive material 92, burying the conductive leads 5, as illustrated in Figure 9C. The layers stacked on top of one another 28, 29 and 94 are in any case designated as a whole by the reference number 30, for simplicity and uniformity with the foregoing description, which is not modified by the presence of the conductive leads buried in the layer 30.

To gain access to the conductive leads, it is sufficient, in a per se known manner, to make a hole through the layers that cover the conductive leads, in regions prearranged for electrical access to said conductive leads 5.

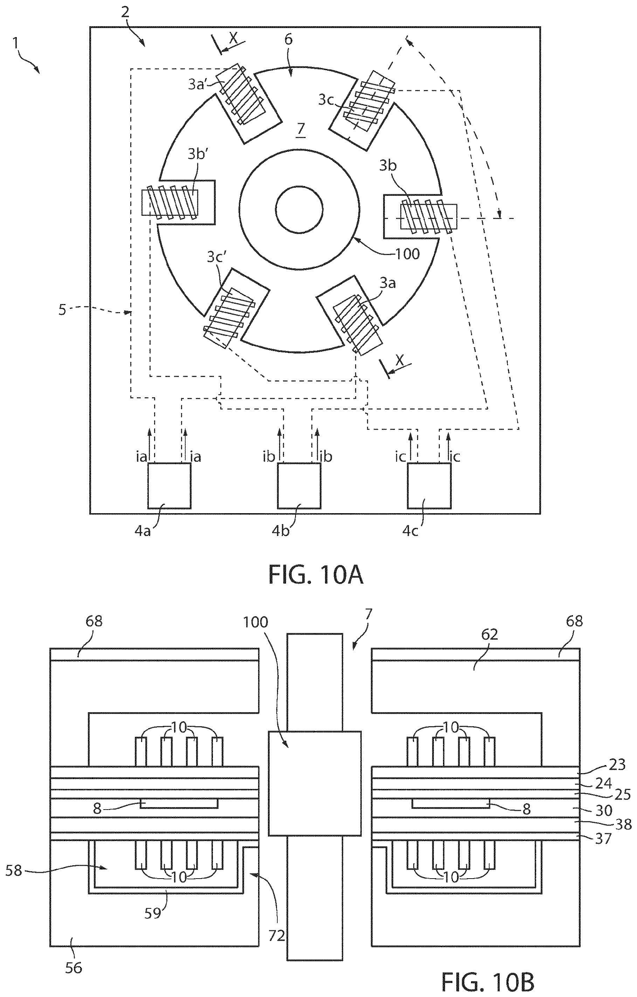

Figure 10A is a schematic illustration, in top plan view in the plane XY, of a portion of a three-phase asynchronous motor comprising the stator 1 according to the present invention and a rotor 100 configured to be inserted in the hole 7 of the stator 1 (in Figure 10a, the rotor 100 is actually inserted in the hole 7 of the stator 1). The hole 7 of the stator is therefore configured (e.g., shaped) to house or accommodate the rotor 100.

Figure 10B is a cross-sectional view along the line of section X-X of the portion of the three-phase asynchronous motor of Figure 10A. Figure 10B is, merely by way of example, based upon Figure 7B. However, the teaching of Figure 10B applies, with evident adaptations, to all the embodiments described according to the present disclosure.

From an examination of the characteristics of the disclosure described and illustrated herein the advantages that it affords are evident.

In particular, the stator described previously is obtained according to manufacturing steps already available in the context of manufacture of semiconductor devices and systems, in a miniaturized and economically advantageous way.

Finally, it is clear that modifications and variations may be made to the disclosure described and illustrated herein, without thereby departing from the scope of the present invention, as defined in the annexed claims.

For instance, the first and second bodies 20, 35 may not be "wafers", but portions of a wafer (e.g., dies or dice cut from a respective wafer). The supporting substrates 22, 36 may be omitted in case handling structures are used to handle the stack formed by layers 23 and 34 and to handle the stack formed by layers 37 and 38.

The term "structural layer(s)" in the previous detailed description means that the mentioned layer forms, at least in part, a part of the structure of the stator 1 in any initial, intermediate or final manufacturing step of the stator 1 or its components or sub-components.

For instance, it is possible to omit formation of one, some, or all of the openings 32 (Figure 4E), 50 (Figure 4H) and 61 (Figure 4O), and remove the respective layers of insulating material during the step of Figure 4A. In this case, it is expedient to use etching chemistries different from one another for removal of the silicon layers 24, 38 and for removal of the layers of silicon oxide/TEOS 23, 25, 30, 37. It is likewise expedient to use an etch with appropriate directionality (along Z) to prevent removal of structural regions of the stator 1, which extend laterally with respect to the region where the hole 7 is to be formed.

In particular, the present invention has been described with explicit reference to a three-phase asynchronous motor; however, the present teaching applies to manufacture of a stator for a different type of motor or actuator, for example of a single-phase synchronous type, a single-phase asynchronous type, a three-phase synchronous type, etc.

In one embodiment, the stator has coils for a radial flux micro-motor.

Generally, the present invention further relates to:
a method of manufacturing a stator 1 for an electrical actuator, comprising the steps of:
- providing a first body 20 including a first semiconductor layer 24, a first structural layer 25 on a first side of the first semiconductor layer 24, and a second structural layer 23 on a second side, opposite to the first side, of the first semiconductor layer 24, wherein the first and second structural layers are made of a material that is selectively removable with respect to the material of the first semiconductor layer 24;
- forming, on the first structural layer 25, a ferromagnetic core region 8;
- covering said core region 8 with a protective dielectric layer 30;
- providing a second body 35 including a second semiconductor layer 38 on a third structural layer 37, wherein the third structural layer is made of a material that is selectively removable with respect to the material of the second semiconductor layer 38;
- coupling the second semiconductor layer 38 of the second body 35 to the protective dielectric layer 30;
- forming a plurality of conductive through vias 14 through the first and second semiconductor layers 24, 38 and through the first and third semiconductor layers 25, 37;
- forming, on the third structural layer 37 in a position corresponding to and above a first side of the core region 8, a first plurality of conductive strips 10 parallel to one another and in electrical contact with the plurality of conductive through vias 14;
- coupling a first protective cap 56 at the third structural layer 37, said first protective cap 56 having a cavity 58 designed to house the first plurality of conductive strips 10;
- forming, on the second structural layer 23 in a position corresponding to and above a second side, opposite to the first side, of the core region 8, a second plurality of conductive strips 10 parallel to one another and in electrical contact with the plurality of conductive through vias 14 by conductive paths through the second structural layer 23;
- coupling a second protective cap 62 to the second structural layer 23, said second protective cap 62 having a respective cavity 64 designed to house the second plurality of conductive strips 10;
- etching a selective portion of the second protective cap 62, which extends laterally with respect to the first and second pluralities of conductive strips 10 to form a through opening passing through the second protective cap 62; and
- forming a hole 70, 7 through the first and second structural bodies 20, 35 by removing selective portions of the first and second bodies 20, 35 that are aligned, in a direction **Z,** to the through opening.

Furthermore, the present invention also generally relates to:
a stator 1 for an electrical actuator, comprising:
- a solid body 20, 35 including layers of semiconductor material 24, 38 arranged between a first layer of insulating material 23 and a second layer of insulating material 37;
- a ferromagnetic core region 8 between the layers of semiconductor material 24, 38, electrically insulated from said layers of semiconductor material 24, 38;
- a plurality of conductive through vias 14 through the solid body 20, 35;
- a first plurality of conductive strips 10 on the first layer of insulating material 23, which extend parallel to one another in positions corresponding to and above a first side of the core region 8;
- a second plurality of conductive strips 10 on the second layer of insulating material 37, which extend parallel to one another in positions corresponding to and above a second side, opposite to the first side, of the core region 8, wherein the first plurality of conductive strips 10, the plurality of conductive through vias 14, and the second plurality of conductive strips 10 are electrically connected together to form a coil wound around the core region 8;
- a first protective cap 56 coupled to the second layer of insulating material 37 and provided with a cavity 58 that is to house the first plurality of conductive strips 10;
- a second protective cap 62 coupled to the first layer of insulating material 23 and provided with a respective cavity 64 that is to house the second plurality of conductive strips 10; and
- a hole 70, 7 passing through at least one between the first protective cap and the second protective cap and through the first and second solid bodies, alongside said coil.

## Claims

1. A method of manufacturing a stator (1) for an electrical actuator, comprising the steps of:
- providing a first wafer (20) including a first semiconductor layer (24), a first insulating layer (25) on a first side of the first semiconductor layer (24), and a second insulating layer (23) on a second side, opposite to the first side, of the first semiconductor layer (24), wherein the first and second insulating layers are made of a material that is selectively removable with respect to the material of the first semiconductor layer (24);
- forming, on the first insulating layer (25), a plurality of ferromagnetic core regions (8) arranged according to a circular pattern, each core region (8) having a first side lying on the first insulating layer (25), a second side opposite to the first side, a third side connecting the first side to the second side and a fourth side, opposite to the third side, connecting the first side to the second side;
- covering said plurality of core regions (8) with a protective dielectric layer (30);
- providing a second wafer (35) including a second semiconductor layer (38) on a third insulating layer (37), wherein the third insulating layer is made of a material that is selectively removable with respect to the material of the second semiconductor layer (38);
- coupling the second semiconductor layer (38) of the second wafer (35) to the protective dielectric layer (30) by means of a wafer-to-wafer bonding technique;
- for each ferromagnetic core region (8), forming a plurality of conductive through vias (14) through the first and second semiconductor layers (24, 38) and through the first and third insulating layers (25, 37), said plurality of conductive through vias (14) extending partly at the third side and partly at the fourth side of the ferromagnetic core region (8);
- for each ferromagnetic core region (8), forming, on the third insulating layer (37) in a position corresponding to and above the second side of the core region (8), a first plurality of conductive strips (10) parallel to one another, wherein each conductive strips (10) of the first plurality of conductive strips (10) has a first end portion (10') and a second end portion (10"), each first end portion (10') being formed in electrical contact with one respective conductive through via (14) of said plurality of conductive through vias (14), and each second end portion (10") being formed in electrical contact with another respective conductive through via (14) of said plurality of conductive through vias (14);
- coupling a first protective cap (56) to the third insulating layer (37), said first protective cap (56) having a cavity (58) configured to house the first plurality of conductive strips (10);
- forming, on the second insulating layer (23) in a position corresponding to and above the first side of the core region (8), a second plurality of conductive strips (10) parallel to one another, wherein each conductive strips (10) of the second plurality of conductive strips (10) has a third end portion (10') and a fourth end portion (10"), each third end portion (10') being formed in electrical contact with one respective conductive through via (14) of said plurality of conductive through vias (14), and each fourth end portion (10") being formed in electrical contact with another respective conductive through via (14) of said plurality of conductive through vias (14);
- coupling a second protective cap (62) to the second insulating layer (23), said second protective cap (62) having a respective cavity (64) configured to house the second plurality of conductive strips (10);
- etching a selective portion of the second protective cap (62), which extends laterally with respect to the first and second pluralities of conductive strips (10) to form a through opening passing through the second protective cap (62); and
- forming a hole (70, 7) through the first and second wafers (20, 35) by removing selective portions of the first and second wafers (20, 35) that are aligned, in a direction (Z), to the through opening, said hole (70, 7) being configured to house a rotor (100).

2. The method according to claim 1, wherein, for each ferromagnetic core region (8), the respective first plurality of conductive strips (10), second plurality of conductive strips (10) and conductive through vias (14) form a coil wound around the respective ferromagnetic core region (8).

3. The method according to claim 1 or 2, wherein said plurality of ferromagnetic core regions (8) is equal to six.

4. The method according to anyone of the preceding claims, wherein said plurality of ferromagnetic core regions (8) are arranged according to said circular pattern around said hole (70, 7).

5. The method according to claim 4, wherein the hole (7, 70) has a circular shape, and wherein each ferromagnetic core region (8) of said plurality of ferromagnetic core regions (8) has a symmetry axis parallel to the first, second, third and fourth sides, said symmetry axis being moreover parallel to a respective radius of said hole (70, 7).

6. The method according to claim 4, wherein each ferromagnetic core region (8) of said plurality of ferromagnetic core regions (8) has a symmetry axis parallel to the first, second, third and fourth sides, said symmetry axis being moreover parallel to a respective radius of said circular pattern.

7. The method according to anyone of the preceding claims, wherein the first wafer (20) further includes a first supporting substrate (22) below the second insulating layer (23), the method further comprising the step of completely removing the first supporting wafer (22) after the step of coupling the first protective cap (56) to the third insulating layer (37) and before forming the second plurality of conductive strips (10).

8. The method according to anyone of the preceding claims, wherein the second wafer (35) further includes a second supporting substrate (36) below the third insulating layer (37), the method further comprising the step of completely removing the second supporting wafer (36) after the step of coupling the second semiconductor layer (38) of the second wafer (35) to the protective dielectric layer (30) and before the step of coupling a first protective cap (56) to the third insulating layer (37).

9. The method according to anyone of the preceding claims, further comprising the step of removing selective portions of the first, second, and third insulating layers (25, 23, 37) and of the protective dielectric layer (30) at portions thereof where said hole (70, 7) is to be formed,
said step of continuing the etch comprising removing the first and second semiconductor layers exposed through the first, second, and third insulating layers (25, 23, 37) and through the protective dielectric layer (30).

10. The method according to anyone of the preceding claims, further comprising the step of etching a selective portion of the first protective cap (56) aligned, in said direction (Z), with said through opening passing through the second protective cap (62) and the hole (70, 7).

11. The method according to anyone of the preceding claims, wherein the step of forming the plurality of conductive through vias (14) comprises:
- after the step of coupling the second semiconductor layer (38) to the protective dielectric layer (30), forming a respective plurality of trenches (43) through the first and second semiconductor layers (24, 38) and through the first and third semiconductor layers (25, 37);
- forming a respective plurality of insulating layers (46) within each trench (43) to cover portions of the first and second semiconductor layers (24, 38) exposed within each trench (43); and
- filling each trench (43) with conductive material.

12. The method according to anyone of claims 1-9, wherein the step of forming the plurality of conductive through vias (14) comprises, prior to the step of coupling the second semiconductor layer (38) to the protective dielectric layer (30):
- forming a respective plurality of first trenches (80) through the first semiconductor layer (24) and through the first insulating layer (25) according to an arrangement pattern;
- uniformly covering inner walls of each first trench (80) with said protective dielectric layer (30);
- forming a respective plurality of second trenches (83) through the second semiconductor layer (38), according to said arrangement pattern; and
- uniformly covering inner walls of each second trench (83) with an insulating layer (84),
wherein the step of coupling the second semiconductor layer (38) to the protective dielectric layer (30) comprises aligning, in said direction (Z), each first trench (80) with a respective second trench (83),
and wherein said step of forming the plurality of conductive through vias (14) further comprises, after the step of coupling the second semiconductor layer (38) to the protective dielectric layer (30):
- removing selective portions of the third insulating layer (37) and of the insulating layer (84) that are vertically aligned, in said direction (Z), with each second trench (83);
- optionally, removing completely or in part the second insulating layer (23); and
- filling each first and second trench (80, 83) with conductive material.

13. The method according to anyone of the preceding claims, wherein said first protective cap (56) has a protuberance (72) inside the cavity (58), which extends in said direction (Z),
the step of coupling the first protective cap (56) to the third insulating layer (37) comprising coupling said protuberance (72) to the third insulating layer (37) laterally with respect to the first and second pluralities of conductive strips (10),
the method further comprising the step of removing portions of said protuberance (72) exposed through said hole (70, 7) to form an opening in part or right through said first protective cap (56).

14. The method according to anyone of the preceding claims, wherein the first, second, and third insulating layers are made of electrically insulating material.

15. A stator (1) for an electrical actuator, comprising:
- a first solid body (20) including a first stack including: a first insulating layer (23) of insulating material, a first semiconductor layer (24) over the first insulating layer (23) of insulating material, a second insulating layer (25) on the first semiconductor layer (24);
- a second solid body (35) including a second stack including: a third insulating layer (37), a second semiconductor layer (38) over the second insulating layer (37), a fourth insulating layer (30) over the second semiconductor layer (38),
wherein the first and second solid bodies (20, 35) are reciprocally coupled to one another through the respective second insulating layer (25) and fourth insulating layer (30),
the stator (1) further comprising:
- a plurality of ferromagnetic core regions (8) between the first and second semiconductor layers (24, 38), electrically insulated from said first and second semiconductor layers (24, 38) respectively by the second insulating layer (25) and the fourth insulating layer (30), the ferromagnetic core regions (8) being arranged according to a circular pattern, each ferromagnetic core region (8) having a first side lying on the second insulating layer (25), a second side opposite to the first side, a third side connecting the first side to the second side and a fourth side, opposite to the third side, connecting the first side to the second side;
- a plurality of conductive through vias (14) extending through the first and second semiconductor layers (24, 38) and through the third (37), second (25) and fourth (30) insulating layers, said plurality of conductive through vias (14) extending partly at the third side and partly at the fourth side of each ferromagnetic core region (8);
- a first plurality of conductive strips (10) on the first insulating layer (23), which extend parallel to one another in positions corresponding to and above the first side of each ferromagnetic core region (8);
- a second plurality of conductive strips (10) on the second insulating layer (37), which extend parallel to one another in positions corresponding to and above the second side of each ferromagnetic core region (8), wherein the first plurality of conductive strips (10), the plurality of conductive through vias (14), and the second plurality of conductive strips (10) are electrically connected together to form a coil wound around the core region (8);
- a first protective cap (56) coupled to the second insulating layer (37) and provided with a cavity (58) configured to house the first plurality of conductive strips (10);
- a second protective cap (62) coupled to the first insulating layer (23) and provided with a respective cavity (64) configured to house the second plurality of conductive strips (10); and
- a hole (70, 7) passing through at least one between the first protective cap and the second protective cap and through the first and second solid bodies, alongside said coil, said hole (70, 7) being configured to house a rotor (100).

16. The stator according to claim 15, wherein each conductive strips (10) of the first plurality of conductive strips (10) has a first end portion (10') and a second end portion (10"), each first end portion (10') being in electrical contact with one respective conductive through via (14) of said plurality of conductive through vias (14), and each second end portion (10") being in electrical contact with another respective conductive through via (14) of said plurality of conductive through vias (14),
and wherein each conductive strips (10) of the second plurality of conductive strips (10) has a third end portion (10') and a fourth end portion (10"), each third end portion (10') being in electrical contact with one respective conductive through via (14) of said plurality of conductive through vias (14), and each fourth end portion (10") being in electrical contact with another respective conductive through via (14) of said plurality of conductive through vias (14).

17. The stator according to claim 15 or 16, wherein the first and the second semiconductor layer are of silicon and the first and the second insulating layer (23) are of silicon dioxide.

18. The stator according to anyone of claims 15-17, wherein the first insulating layer (25) extends at a first side of the ferromagnetic core region (8) and electrically insulates the ferromagnetic core region (8) from the first semiconductor layer (24),
and wherein the second insulating layer (30) extends at a second side, opposite to the first side, of the ferromagnetic core region (8) and electrically insulates the ferromagnetic core region (8) from the second semiconductor layer (38).

19. The stator according to anyone of claims 15-18, comprising a number of coils equal to three or a multiple of three.

20. An electric actuator or motor comprising a stator according to anyone of claims 15-19.

## Patentansprüche

1. Verfahren zum Herstellen eines Stators (1) für einen elektrischen Aktuator, das die folgenden Schritte umfasst:
- Bereitstellen eines ersten Wafers (20), der eine erste Halbleiterschicht (24), eine erste Isolierschicht (25) auf einer ersten Seite der ersten Halbleiterschicht (24) und eine zweite Isolierschicht (23) auf einer zweiten, der ersten Seite gegenüberliegenden Seite der ersten Halbleiterschicht (24) enthält, wobei die erste und die zweite Isolierschicht aus einem Material bestehen, das in Bezug auf das Material der ersten Halbleiterschicht (24) selektiv entfernbar ist;
- Bilden einer Vielzahl von ferromagnetischen Kernbereichen (8), die gemäß einem kreisförmigen Muster angeordnet sind, auf der ersten Isolierschicht (25), wobei jeder Kernbereich (8) eine erste Seite, die auf der ersten Isolierschicht (25) aufliegt, eine zweite Seite, die der ersten Seite gegenüberliegt, eine dritte Seite, die die erste Seite mit der zweiten Seite verbindet, und eine vierte Seite aufweist, die der dritten Seite gegenüberliegt und die erste Seite mit der zweiten Seite verbindet;
- Abdecken der Vielzahl von Kernbereichen (8) mit einer schützenden dielektrischen Schicht (30);
- Bereitstellen eines zweiten Wafers (35), der eine zweite Halbleiterschicht (38) auf einer dritten Isolierschicht (37) enthält, wobei die dritte Isolierschicht aus einem Material besteht, das in Bezug auf das Material der zweiten Halbleiterschicht (38) selektiv entfernbar ist;
- Koppeln der zweiten Halbleiterschicht (38) des zweiten Wafers (35) mit der schützenden dielektrischen Schicht (30) mittels einer Wafer-zu-Wafer-Bonding-Technik;
- für jeden ferromagnetischen Kernbereich (8), Bilden einer Vielzahl von leitfähigen Durchkontaktierungen (14) durch die erste und die zweite Halbleiterschicht (24, 38) sowie durch die erste und die dritte Isolierschicht (25, 37), wobei sich die Vielzahl von leitfähigen Durchkontaktierungen (14) teilweise an der dritten Seite und teilweise an der vierten Seite des ferromagnetischen Kernbereichs (8) erstreckt;
- für jeden ferromagnetischen Kernbereich (8), Bilden einer ersten Vielzahl von zueinander parallelen leitfähigen Streifen (10) auf der dritten Isolierschicht (37) in einer Position, die der zweiten Seite des Kernbereichs (8) entspricht und über dieser liegt, wobei jeder leitfähige Streifen (10) der ersten Vielzahl von leitfähigen Streifen (10) einen ersten Endabschnitt (10') und einen zweiten Endabschnitt (10") aufweist, wobei jeder erste Endabschnitt (10') in elektrischem Kontakt mit einer jeweiligen leitfähigen Durchkontaktierung (14) der Vielzahl von leitfähigen Durchkontaktierungen (14) steht und jeder zweite Endabschnitt (10") in elektrischem Kontakt mit einer anderen jeweiligen leitfähigen Durchkontaktierung (14) der Vielzahl von leitfähigen Durchkontaktierungen (14) steht;
- Koppeln einer ersten Schutzkappe (56) mit der dritten Isolierschicht (37), wobei die erste Schutzkappe (56) einen Hohlraum (58) aufweist, der so konfiguriert ist, dass er die erste Vielzahl von leitfähigen Streifen (10) aufnimmt;
- Bilden einer zweiten Vielzahl von zueinander parallelen leitfähigen Streifen (10) auf der zweiten Isolierschicht (23) in einer Position, die der ersten Seite des Kernbereichs (8) entspricht und über dieser liegt, wobei jeder leitfähige Streifen (10) der zweiten Vielzahl von leitfähigen Streifen (10) einen dritten Endabschnitt (10') und einen vierten Endabschnitt (10") aufweist, wobei jeder dritte Endabschnitt (10') in elektrischem Kontakt mit einer jeweiligen leitfähigen Durchkontaktierung (14) der Vielzahl von leitfähigen Durchkontaktierungen (14) steht und jeder vierte Endabschnitt (10") in elektrischem Kontakt mit einer anderen jeweiligen leitfähigen Durchkontaktierung (14) der Vielzahl von leitfähigen Durchkontaktierungen (14) steht;
- Koppeln einer zweiten Schutzkappe (62) mit der zweiten Isolierschicht (23), wobei die zweite Schutzkappe (62) jeweils einen Hohlraum (64) aufweist, der so konfiguriert ist, dass er die zweite Vielzahl von leitfähigen Streifen (10) aufnimmt;
- Ätzen eines selektiven Abschnitts der zweiten Schutzkappe (62), die sich seitlich in Bezug auf die erste und die zweite Vielzahl von leitfähigen Streifen (10) erstreckt, um eine Durchgangsöffnung zu bilden, die durch die zweite Schutzkappe (62) hindurchführt; und
- Bilden eines Lochs (70, 7) durch den ersten und den zweiten Wafer (20, 35) durch Entfernen selektiver Abschnitte des ersten und des zweiten Wafers (20, 35), die in einer Richtung (Z) auf die Durchgangsöffnung ausgerichtet sind, wobei das Loch (70, 7) so konfiguriert ist, dass es einen Rotor (100) aufnimmt.

2. Verfahren nach Anspruch 1, wobei für jeden ferromagnetischen Kernbereich (8) die jeweilige erste Vielzahl von leitfähigen Streifen (10), die zweite Vielzahl von leitfähigen Streifen (10) und leitfähige Durchkontaktierungen (14) eine um den jeweiligen ferromagnetischen Kernbereich (8) gewickelte Spule bilden.

3. Verfahren nach Anspruch 1 oder 2, wobei die Vielzahl von ferromagnetischen Kernbereichen (8) sechs beträgt.

4. Verfahren nach einem der vorhergehenden Ansprüche, wobei die Vielzahl von ferromagnetischen Kernbereichen (8) gemäß dem kreisförmigen Muster um das Loch (70, 7) herum angeordnet sind.

5. Verfahren nach Anspruch 4, wobei das Loch (7, 70) eine kreisförmige Form aufweist, und wobei jeder ferromagnetische Kernbereich (8) der Vielzahl von ferromagnetischen Kernbereichen (8) eine Symmetrieachse aufweist, die parallel zu der ersten, der zweiten, der dritten und der vierten Seite verläuft, wobei die Symmetrieachse zudem parallel zu einem jeweiligen Radius des Lochs (70, 7) verläuft.

6. Verfahren nach Anspruch 4, wobei jeder ferromagnetische Kernbereich (8) der Vielzahl von ferromagnetischen Kernbereichen (8) eine Symmetrieachse aufweist, die parallel zu der ersten, der zweiten, der dritten und der vierten Seite verläuft, wobei die Symmetrieachse zudem parallel zu einem jeweiligen Radius des kreisförmigen Musters verläuft.

7. Verfahren nach einem der vorhergehenden Ansprüche, wobei der erste Wafer (20) ferner ein erstes Trägersubstrat (22) unterhalb der zweiten Isolierschicht (23) enthält, wobei das Verfahren ferner den Schritt des vollständigen Entfernens des ersten Trägerwafers (22) nach dem Schritt des Kopplens der ersten Schutzkappe (56) mit der dritten Isolierschicht (37) und vor dem Bilden der zweiten Vielzahl von leitfähigen Streifen (10) umfasst.

8. Verfahren nach einem der vorhergehenden Ansprüche, wobei der zweite Wafer (35) ferner ein zweites Trägersubstrat (36) unterhalb der dritten Isolierschicht (37) enthält, wobei das Verfahren ferner den Schritt des vollständigen Entfernens des zweiten Trägerwafers (36) nach dem Schritt des Koppelns der zweiten Halbleiterschicht (38) des zweiten Wafers (35) mit der schützenden dielektrischen Schicht (30) und vor dem Schritt des Koppelns einer ersten Schutzkappe (56) mit der dritten Isolierschicht (37) umfasst.

9. Verfahren nach einem der vorhergehenden Ansprüche, umfassend ferner den Schritt des selektiven Entfernens von Abschnitten der ersten, der zweiten und der dritten Isolierschicht (25, 23, 37) sowie der schützenden dielektrischen Schicht (30) an Abschnitten davon, an denen das Loch (70, 7) ausgebildet werden soll,
wobei der Schritt des Fortsetzens des Ätzens das Entfernen der ersten und der zweiten Halbleiterschicht umfasst, die durch die erste, die zweite und die dritte Isolierschicht (25, 23, 37) sowie durch die schützende dielektrische Schicht (30) freigelegt sind.

10. Verfahren nach einem der vorhergehenden Ansprüche, umfassend ferner den Schritt des Ätzens eines selektiven Abschnitts der ersten Schutzkappe (56), der in der Richtung (Z) auf die durch die zweite Schutzkappe (62) und das Loch (70, 7) verlaufende Durchgangsöffnung ausgerichtet ist.

11. Verfahren nach einem der vorhergehenden Ansprüche, wobei der Schritt des Bildens der Vielzahl von leitfähigen Durchkontaktierungen (14) Folgendes umfasst:
- nach dem Schritt des Kopplens der zweiten Halbleiterschicht (38) mit der schützenden dielektrischen Schicht (30), Bilden einer jeweiligen Vielzahl von Gräben (43) durch die erste und die zweite Halbleiterschicht (24, 38) sowie durch die erste und die dritte Halbleiterschicht (25, 37);
- Bilden einer jeweiligen Vielzahl von Isolierschichten (46) innerhalb jedes Grabens (43), um Abschnitte der ersten und der zweiten Halbleiterschicht (24, 38), die innerhalb jedes Grabens (43) freigelegt sind, abzudecken; und
- Füllen jedes Grabens (43) mit leitfähigem Material.

12. Verfahren nach einem der Ansprüche 1 bis 9, wobei der Schritt des Bildens der Vielzahl von leitfähigen Durchkontaktierungen (14) vor dem Schritt des Koppelns der zweiten Halbleiterschicht (38) mit der schützenden dielektrischen Schicht (30) Folgendes umfasst:
- Bilden einer jeweiligen Vielzahl von ersten Gräben (80), die durch die erste Halbleiterschicht (24) und durch die erste Isolierschicht (25) gemäß einem Anordnungsmuster verlaufen;
- gleichmäßiges Bedecken der Innenwände jedes ersten Grabens (80) mit der schützenden dielektrischen Schicht (30);
- Bilden einer jeweiligen Vielzahl von zweiten Gräben (83) durch die zweite Halbleiterschicht (38) gemäß dem Anordnungsmuster; und
- gleichmäßiges Bedecken der Innenwände jedes zweiten Grabens (83) mit einer Isolierschicht (84),
wobei der Schritt des Koppelns der zweiten Halbleiterschicht (38) mit der schützenden dielektrischen Schicht (30) das Ausrichten, in der Richtung (Z), jedes ersten Grabens (80) auf einen jeweiligen zweiten Graben (83) umfasst,
und wobei der Schritt des Bildens der Vielzahl von leitfähigen Durchkontaktierungen (14) nach dem Schritt des Koppelns der zweiten Halbleiterschicht (38) mit der schützenden dielektrischen Schicht (30) ferner Folgendes umfasst:
- Entfernen von selektiven Abschnitten der dritten Isolierschicht (37) und der Isolierschicht (84), die in der Richtung (Z) vertikal auf jeden zweiten Graben (83) ausgerichtet sind;
- optional vollständiges oder teilweises Entfernen der zweiten Isolierschicht (23); und
- Füllen jedes ersten und zweiten Grabens (80, 83) mit leitfähigem Material.

13. Verfahren nach einem der vorhergehenden Ansprüche, wobei die erste Schutzkappe (56) eine Ausbuchtung (72) innerhalb des Hohlraums (58) aufweist, die sich in der Richtung (Z) erstreckt,
wobei der Schritt des Koppelns der ersten Schutzkappe (56) mit der dritten Isolierschicht (37) das Koppeln der Ausbuchtung (72), seitlich in Bezug auf die erste und die zweite Vielzahl von leitfähigen Streifen (10), mit der dritten Isolierschicht (37) umfasst,
wobei das Verfahren ferner den Schritt des Entfernens von Abschnitten der Ausbuchtung (72) umfasst, die durch das Loch (70, 7) freigelegt sind, um eine Öffnung teilweise oder vollständig durch die erste Schutzkappe (56) zu bilden.

14. Verfahren nach einem der vorhergehenden Ansprüche, wobei die erste, die zweite und die dritte Isolierschicht aus elektrisch isolierendem Material bestehen.

15. Stator (1) für einen elektrischen Aktuator, umfassend:
- einen ersten Festkörper (20), der einen ersten Stapel enthält, der Folgendes enthält: eine erste Isolierschicht (23) aus isolierendem Material, eine erste Halbleiterschicht (24) über der ersten Isolierschicht (23) aus isolierendem Material, eine zweite Isolierschicht (25) auf der ersten Halbleiterschicht (24);
- einen zweiten Festkörper (35), der einen zweiten Stapel enthält, der Folgendes enthält: eine dritte Isolierschicht (37), eine zweite Halbleiterschicht (38) über der dritten Isolierschicht (37), eine vierte Isolierschicht (30) über der zweiten Halbleiterschicht (38),
wobei der erste und der zweite Festkörper (20, 35) durch die jeweilige zweite Isolierschicht (25) und die vierte Isolierschicht (30) miteinander gekoppelt sind,
wobei der Stator (1) ferner Folgendes umfasst:
- eine Vielzahl von ferromagnetischen Kernbereichen (8) zwischen der ersten und der zweiten Halbleiterschicht (24, 38), die jeweils durch die zweite Isolierschicht (25) und die vierte Isolierschicht (30) elektrisch von der ersten und der zweiten Halbleiterschicht (24, 38) isoliert sind, wobei die ferromagnetischen Kernbereiche (8) gemäß einem kreisförmigen Muster angeordnet sind, wobei jeder ferromagnetische Kernbereich (8) eine erste Seite, die auf der zweiten Isolierschicht (25) aufliegt, eine zweite Seite, die der ersten Seite gegenüberliegt, eine dritte Seite, die die erste Seite mit der zweiten Seite verbindet, und eine vierte Seite aufweist, die der dritten Seite gegenüberliegt und die erste Seite mit der zweiten Seite verbindet;
- eine Vielzahl von leitfähigen Durchkontaktierungen (14), die sich durch die erste und die zweite Halbleiterschicht (24, 38) sowie durch die dritte (37), die zweite (25) und die vierte (30) Isolierschicht erstrecken, wobei sich die Vielzahl von leitfähigen Durchkontaktierungen (14) teilweise an der dritten Seite und teilweise an der vierten Seite jedes ferromagnetischen Kernbereichs (8) erstreckt;
- eine erste Vielzahl von leitfähigen Streifen (10) auf der ersten Isolierschicht (23), die sich parallel zueinander in Positionen erstrecken, die der ersten Seite jedes ferromagnetischen Kernbereichs (8) entsprechen und über dieser liegen;
- eine zweite Vielzahl von leitfähigen Streifen (10) auf der zweiten Isolierschicht (37), die sich parallel zueinander in Positionen erstrecken, die der zweiten Seite jedes ferromagnetischen Kernbereichs (8) entsprechen und über dieser liegen, wobei die erste Vielzahl von leitfähigen Streifen (10), die Vielzahl von leitfähigen Durchkontaktierungen (14) und die zweite Vielzahl von leitfähigen Streifen (10) elektrisch miteinander verbunden sind, um eine um den Kernbereich (8) gewickelte Spule zu bilden;
- eine erste Schutzkappe (56), die mit der zweiten Isolierschicht (37) gekoppelt ist und mit einem Hohlraum (58) versehen ist, der so konfiguriert ist, dass er die erste Vielzahl von leitfähigen Streifen (10) aufnimmt;
- eine zweite Schutzkappe (62), die mit der ersten Isolierschicht (23) gekoppelt ist und mit einem jeweiligen Hohlraum (64) versehen ist, der so konfiguriert ist, dass er die zweite Vielzahl von leitfähigen Streifen (10) aufnimmt; und
- ein Loch (70, 7), das mindestens durch eine der ersten Schutzkappe und der zweiten Schutzkappe sowie durch den ersten und den zweiten Festkörper neben der Spule verläuft, wobei das Loch (70, 7) so konfiguriert ist, dass es einen Rotor (100) aufnimmt.

16. Stator nach Anspruch 15, wobei jeder leitfähige Streifen (10) der ersten Vielzahl von leitfähigen Streifen (10) einen ersten Endabschnitt (10') und einen zweiten Endabschnitt (10") aufweist, wobei jeder erste Endabschnitt (10') in elektrischem Kontakt mit einer jeweiligen leitfähigen Durchkontaktierung (14) der Vielzahl von leitfähigen Durchkontaktierungen (14) steht und jeder zweite Endabschnitt (10") in elektrischem Kontakt mit einer anderen jeweiligen leitfähigen Durchkontaktierung (14) der Vielzahl von leitfähigen Durchkontaktierungen (14) steht,
und wobei jeder leitfähige Streifen (10) der zweiten Vielzahl von leitfähigen Streifen (10) einen dritten Endabschnitt (10') und einen vierten Endabschnitt (10") aufweist, wobei jeder dritte Endabschnitt (10') in elektrischem Kontakt mit einer jeweiligen leitfähigen Durchkontaktierung (14) der Vielzahl von leitfähigen Durchkontaktierungen (14) steht und jeder vierte Endabschnitt (10") in elektrischem Kontakt mit einer anderen jeweiligen leitfähigen Durchkontaktierung (14) der Vielzahl von leitfähigen Durchkontaktierungen (14) steht.

17. Stator nach Anspruch 15 oder 16, wobei die erste und die zweite Halbleiterschicht aus Silizium bestehen und die erste und die zweite Isolierschicht (23) aus Siliziumdioxid bestehen.

18. Stator nach einem der Ansprüche 15 bis 17, wobei sich die erste Isolierschicht (25) an einer ersten Seite des ferromagnetischen Kernbereichs (8) erstreckt und den ferromagnetischen Kernbereich (8) elektrisch von der ersten Halbleiterschicht (24) isoliert,
und wobei sich die zweite Isolierschicht (30) an einer der ersten Seite gegenüberliegenden, zweiten Seite des ferromagnetischen Kernbereichs (8) erstreckt und den ferromagnetischen Kernbereich (8) elektrisch von der zweiten Halbleiterschicht (38) isoliert.

19. Stator nach einem der Ansprüche 15 bis 18, der eine Anzahl an Spulen umfasst, die drei oder ein Vielfaches von drei beträgt.

20. Elektrischer Aktuator oder Motor, umfassend einen Stator nach einem der Ansprüche 15 bis 19.

## Revendications

1. Procédé de fabrication d'un stator (1) pour un actionneur électrique, comprenant les étapes suivantes :
- fournir une première plaquette (20) comportant une première couche de semiconducteur (24), une première couche isolante (25) sur un premier côté de la première couche de semiconducteur (24), et une deuxième couche isolante (23) sur un deuxième côté, opposé au premier côté, de la première couche de semiconducteur (24), dans lequel les première et deuxième couches isolantes sont faites d'un matériau qui peut être retiré de façon sélective par rapport au matériau de la première couche de semiconducteur (24) ;
- former, sur la première couche isolante (25), une pluralité de régions de cœur ferromagnétiques (8) disposées selon un motif circulaire, chaque région de cœur (8) ayant un premier côté reposant sur la première couche isolante (25), un deuxième côté opposé au premier côté, un troisième côté reliant le premier côté au deuxième côté et un quatrième côté, opposé au troisième côté, reliant le premier côté au deuxième côté ;
- recouvrir ladite pluralité de régions de cœur (8) d'une couche protectrice diélectrique (30) ;
- fournir une deuxième plaquette (35) comportant une deuxième couche de semiconducteur (38) sur une troisième couche isolante (37), dans lequel la troisième couche isolante est faite d'un matériau qui peut être retiré de façon sélective par rapport au matériau de la deuxième couche de semiconducteur (38) ;
- coupler la deuxième couche de semiconducteur (38) de la deuxième plaquette (35) à la couche protectrice diélectrique (30) au moyen d'une technique de collage de plaquette sur plaquette ;
- pour chaque région de cœur ferromagnétique (8), former une pluralité de trous d'interconnexion conducteurs (14) à travers les première et deuxième couches de semiconducteur (24, 38) et à travers les première et troisième couches isolantes (25, 37), ladite pluralité de trous d'interconnexion conducteurs (14) s'étendant en partie sur le troisième côté et en partie sur le quatrième côté de la région de cœur ferromagnétique (8) ;
- pour chaque région de cœur ferromagnétique (8), former, sur la troisième couche isolante (37) en une position correspondant au deuxième côté de la région de cœur (8) et au-dessus de celle-ci, une première pluralité de bandes conductrices (10) parallèles entre elles, dans lequel chaque bande conductrice (10) de la première pluralité de bandes conductrices (10) a une première partie d'extrémité (10') et une deuxième partie d'extrémité (10"), chaque première partie d'extrémité (10') étant formée en contact électrique avec un trou d'interconnexion conducteur respectif (14) de ladite pluralité de trous d'interconnexion conducteurs (14), et chaque deuxième partie d'extrémité (10") étant formée en contact électrique avec un autre trou d'interconnexion conducteur respectif (14) de ladite pluralité de trous d'interconnexion conducteurs (14) ;
- accoupler un premier capot protecteur (56) à la troisième couche isolante (37), ledit premier capot protecteur (56) ayant une cavité (58) configurée pour contenir la première pluralité de bandes conductrices (10) ;
- former, sur la deuxième couche isolante (23) en une position correspondant au premier côté de la région de cœur (8) et au-dessus de celle-ci, une deuxième pluralité de bandes conductrices (10) parallèles entre elles, dans lequel chaque bande conductrice (10) de la deuxième pluralité de bandes conductrices (10) a une troisième partie d'extrémité (10') et une quatrième partie d'extrémité (10"), chaque troisième partie d'extrémité (10') étant formée en contact électrique avec un trou d'interconnexion conducteur respectif (14) de ladite pluralité de trous d'interconnexion conducteurs (14), et chaque quatrième partie d'extrémité (10") étant formée en contact électrique avec un autre trou d'interconnexion conducteur respectif (14) de ladite pluralité de trous d'interconnexion conducteurs (14) ;
- accoupler un deuxième capot protecteur (62) à la deuxième couche isolante (23), ledit deuxième capot protecteur (62) ayant une cavité respective (64) configurée pour contenir la deuxième pluralité de bandes conductrices (10) ;
- graver une partie sélective du deuxième capot protecteur (62), qui s'étend latéralement par rapport aux première et deuxième pluralités de bandes conductrices (10) pour former une ouverture traversante passant à travers le deuxième capot protecteur (62) ; et
- former un trou (70, 7) dans les première et deuxième plaquettes (20, 35) en retirant des parties sélectives des première et deuxième plaquettes (20, 35) qui sont alignées, dans une direction (Z), avec l'ouverture traversante, ledit trou (70, 7) étant configuré pour recevoir un rotor (100).

2. Procédé selon la revendication 1, dans lequel, pour chaque région de cœur ferromagnétique (8), les première pluralité de bandes conductrices (10), deuxième pluralité de bandes conductrices (10) et trous d'interconnexion conducteurs (14) respectifs forment une bobine enroulée autour de la région de cœur ferromagnétique (8) respective.

3. Procédé selon la revendication 1 ou 2, dans lequel ladite pluralité de régions de cœur ferromagnétiques (8) est égale à six.

4. Procédé selon l'une quelconque des revendications précédentes, dans lequel lesdites régions de cœur ferromagnétiques (8) sont disposées selon ledit motif circulaire autour dudit trou (70, 7).

5. Procédé selon la revendication 4, dans lequel le trou (7, 70) a une forme circulaire, et dans lequel chaque région de cœur ferromagnétique (8) de ladite pluralité de régions de cœur ferromagnétiques (8) a un axe de symétrie parallèle aux premier, deuxième, troisième et quatrième côtés, ledit axe de symétrie étant de plus parallèle à un rayon respectif dudit trou (70, 7).

6. Procédé selon la revendication 4, dans lequel chaque région de cœur ferromagnétique (8) de ladite pluralité de régions de cœur ferromagnétiques (8) a un axe de symétrie parallèle aux premier, deuxième, troisième et quatrième côtés, ledit axe de symétrie étant de plus parallèle à un rayon respectif dudit motif circulaire.

7. Procédé selon l'une quelconque des revendications précédentes, dans lequel la première plaquette (20) comporte en outre un premier substrat de support (22) sous la deuxième couche isolante (23), le procédé comprenant en outre l'étape consistant à supprimer complètement la première plaquette de support (22) après l'étape d'accouplement du premier capot protecteur (56) à la troisième couche isolante (37) et avant la formation de la deuxième pluralité de bandes conductrices (10).

8. Procédé selon l'une quelconque des revendications précédentes, dans lequel la deuxième plaquette (35) comporte en outre un deuxième substrat de support (36) sous la troisième couche isolante (37), le procédé comprenant en outre l'étape consistant à supprimer complètement la deuxième plaquette de support (36) après l'étape de couplage de la deuxième couche de semiconducteur (38) de la deuxième plaquette (35) à la couche protectrice diélectrique (30) et avant l'étape d'accouplement d'un premier capot protecteur (56) à la troisième couche isolante (37).

9. Procédé selon l'une quelconque des revendications précédentes, comprenant en outre l'étape consistant à supprimer des parties sélectives des première, deuxième et troisième couches isolantes (25, 23, 37) et de la couche protectrice diélectrique (30) dans des parties de celle-ci où ledit trou (70, 7) doit être formé,
ladite étape de prolongement de la gravure comprenant le fait de supprimer les première et deuxième couches de semiconducteur exposées à travers les première, deuxième et troisième couches isolantes (25, 23, 37) et à travers la couche protectrice diélectrique (30).

10. Procédé selon l'une quelconque des revendications précédentes, comprenant en outre l'étape consistant à graver une partie sélective du premier capot protecteur (56) alignée, dans ladite direction (Z), avec ladite ouverture traversant le deuxième capot protecteur (62) et le trou (70, 7).

11. Procédé selon l'une quelconque des revendications précédentes, dans lequel l'étape de formation de la pluralité de trous d'interconnexion conducteurs (14) comprend les opérations suivantes :
- après l'étape de couplage de la deuxième couche de semiconducteur (38) à la couche protectrice diélectrique (30), former une pluralité respective de tranchées (43) dans les première et deuxième couches de semiconducteur (24, 38) et dans les première et troisième couches de semiconducteur (25, 37) ;
- former une pluralité respective de couches isolantes (46) dans chaque tranchée (43) pour couvrir les parties des première et deuxième couches de semiconducteur (24, 38) exposées dans chaque tranchée (43) ; et
- remplir chaque tranchée (43) d'un matériau conducteur.

12. Procédé selon l'une quelconque des revendications 1 à 9, dans lequel l'étape de formation de la pluralité de trous d'interconnexion conducteurs (14) comprend, avant l'étape de couplage de la deuxième couche de semiconducteur (38) à la couche protectrice diélectrique (30), les opérations suivantes :
- former une pluralité respective de premières tranchées (80) dans la première couche de semiconducteur (24) et dans la première couche isolante (25) selon un motif d'agencement ;
- recouvrir de manière uniforme les parois intérieures de chaque première tranchée (80) avec ladite couche protectrice diélectrique (30) ;
- former une pluralité respective de deuxièmes tranchées (83) dans la deuxième couche de semiconducteur (38), selon ledit motif d'agencement ; et
- recouvrir de manière uniforme les parois intérieures de chaque deuxième tranchée (83) avec une couche isolante (84),
dans lequel l'étape de couplage de la deuxième couche de semiconducteur (38) à la couche protectrice diélectrique (30) comprend le fait d'aligner, dans ladite direction (Z), chaque première tranchée (80) avec une deuxième tranchée (83) respective,
et dans lequel ladite étape de formation de la pluralité de trous d'interconnexion conducteurs (14) comprend en outre, après l'étape de couplage de la deuxième couche de semiconducteur (38) à la couche protectrice diélectrique (30), les opérations suivantes :
- supprimer des parties sélectives de la troisième couche isolante (37) et de la couche isolante (84) qui sont alignées verticalement, dans ladite direction (Z), avec chaque deuxième tranchée (83) ;
- en option, supprimer complètement ou en partie la deuxième couche isolante (23) ; et
- remplir chaque première et deuxième tranchée (80, 83) avec un matériau conducteur.

13. Procédé selon l'une quelconque des revendications précédentes, dans lequel ledit premier capot protecteur (56) a une protubérance (72) à l'intérieur de la cavité (58), qui s'étend dans ladite direction (Z),
l'étape d'accouplement du premier capot protecteur (56) à la troisième couche isolante (37) comprenant l'accouplement de ladite protubérance (72) à la troisième couche isolante (37) latéralement par rapport aux première et deuxième pluralités de bandes conductrices (10),
le procédé comprenant en outre l'étape consistant à retirer des parties de ladite protubérance (72) exposées à travers ledit trou (70, 7) pour former une ouverture dans une partie ou directement dans ledit premier capot protecteur (56).

14. Procédé selon l'une quelconque des revendications précédentes, dans lequel les première, deuxième et troisième couches isolantes sont faites d'un matériau isolant électriquement.

15. Stator (1) pour actionneur électrique, comprenant :
- un premier corps plein (20) comportant un premier empilement comportant : une première couche isolante (23) en matériau isolant, une première couche de semiconducteur (24) sur la première couche isolante (23) en matériau isolant, une deuxième couche isolante (25) sur la première couche de semiconducteur (24) ;
- un deuxième corps plein (35) comportant un deuxième empilement comportant : une troisième couche isolante (37), une deuxième couche de semiconducteur (38) sur la deuxième couche isolante (37), une quatrième couche isolante (30) sur la deuxième couche de semiconducteur (38),
dans lequel les premier et deuxième corps pleins (20, 35) sont accouplés réciproquement l'un à l'autre par l'intermédiaire des deuxième couche isolante (25) et quatrième couche isolante (30) respectives,
le stator (1) comprenant en outre :
- une pluralité de régions de cœur ferromagnétiques (8) entre les première et deuxième couches de semiconducteur (24, 38), isolées électriquement desdites première et deuxième couches de semiconducteur (24, 38) respectivement par la deuxième couche isolante (25) et la quatrième couche isolante (30), les régions de cœur ferromagnétiques (8) étant disposées selon un motif circulaire, chaque région de cœur ferromagnétique (8) ayant un premier côté reposant sur la deuxième couche isolante (25), un deuxième côté opposé au premier côté, un troisième côté reliant le premier côté au deuxième côté et un quatrième côté, opposé au troisième côté, reliant le premier côté au deuxième côté ;
- une pluralité de trous d'interconnexion conducteurs (14) s'étendant à travers les première et deuxième couches de semiconducteur (24, 38) et à travers les troisième (37), deuxième (25) et quatrième (30) couches isolantes, ladite pluralité de trous d'interconnexion conducteurs (14) s'étendant en partie sur le troisième côté et en partie sur le quatrième côté de chaque région de cœur ferromagnétique (8) ;
- une première pluralité de bandes conductrices (10) sur la première couche isolante (23), qui s'étendent parallèlement entre elles en des positions correspondant au premier côté de chaque région de cœur ferromagnétique (8) et au-dessus de celui-ci ;
- une deuxième pluralité de bandes conductrices (10) sur la deuxième couche isolante (37), qui s'étendent parallèlement entre elles en des positions correspondant au deuxième côté de chaque région de cœur ferromagnétique (8) et au-dessus de celui-ci, dans lequel la première pluralité de bandes conductrices (10), la pluralité de trous d'interconnexion conducteurs (14) et la deuxième pluralité de bandes conductrices (10) sont reliés électriquement entre eux pour former une bobine enroulée autour de la région de cœur (8) ;
- un premier capot protecteur (56) accouplé à la deuxième couche isolante (37) et pourvu d'une cavité (58) configurée pour contenir la première pluralité de bandes conductrices (10) ;
- un deuxième capot protecteur (62) accouplé à la première couche isolante (23) et pourvu d'une cavité respective (64) configurée pour contenir la deuxième pluralité de bandes conductrices (10) ; et
- un trou (70, 7) traversant au moins un élément parmi le premier capot protecteur et le deuxième capot protecteur et traversant les premier et deuxième corps pleins, à côté de ladite bobine, ledit trou (70, 7) étant configuré pour recevoir un rotor (100).

16. Stator selon la revendication 15, dans lequel chaque bande conductrice (10) de la première pluralité de bandes conductrices (10) a une première partie d'extrémité (10') et une deuxième partie d'extrémité (10"), chaque première partie d'extrémité (10') étant en contact électrique avec un trou d'interconnexion conducteur respectif (14) de ladite pluralité de trous d'interconnexion conducteurs (14), et chaque deuxième partie d'extrémité (10") étant en contact électrique avec un autre trou d'interconnexion conducteur respectif (14) de ladite pluralité de trous d'interconnexion conducteurs (14),
et dans lequel chaque bande conductrice (10) de la deuxième pluralité de bandes conductrices (10) a une troisième partie d'extrémité (10') et une quatrième partie d'extrémité (10"), chaque troisième partie d'extrémité (10') étant en contact électrique avec un trou d'interconnexion conducteur respectif (14) de ladite pluralité de trous d'interconnexion conducteurs (14), et chaque quatrième partie d'extrémité (10") étant en contact électrique avec un autre trou d'interconnexion conducteur respectif (14) de ladite pluralité de trous d'interconnexion conducteurs (14).

17. Stator selon la revendication 15 ou 16, dans lequel les première et deuxième couches de semiconducteur sont en silicium et les première et deuxième couches isolantes (23) sont en dioxyde de silicium.

18. Stator selon l'une quelconque des revendications 15 à 17, dans lequel la première couche isolante (25) s'étend sur un premier côté de la région de cœur ferromagnétique (8) et isole électriquement la région de cœur ferromagnétique (8) de la première couche de semiconducteur (24),
et dans lequel la deuxième couche isolante (30) s'étend sur un deuxième côté, opposé au premier côté, de la région de cœur ferromagnétique (8) et isole électriquement la région de cœur ferromagnétique (8) de la deuxième couche de semiconducteur (38).

19. Stator selon l'une quelconque des revendications 15 à 18, comprenant un nombre de bobines égal à trois ou à un multiple de trois.

20. Actionneur électrique ou moteur électrique comprenant un stator selon l'une quelconque des revendications 15 à 19.
